# EUROPÄISCHE PATENTSCHRIFT

(11) **EP 3 688 858 B1**
(45) Veröffentlichungstag und Bekanntmachung des Hinweises auf die Patenterteilung: **01.11.2023**
(21) Anmeldenummer: 18789007.4
(22) Anmeldetag: 26.09.2018
(51) Int. Cl.: H02J 7/00, H02J 3/14, B60L 53/14, B60L 53/30, B60L 53/63, B60L 53/67, H02J 3/32

(54) **MODULARE VORRICHTUNG ZUM ZEITVERSETZTEN LADEN VON MEHREREN ELEKTROFAHRZEUGEN EINER LADESTATION**
MODULAR APPARATUS FOR TIME-DISPLACED CHARGING OF SEVERAL ELECTRIC VEHICLES ON A CHARGING STATION
DISPOSITIF MODULAIRE DE CHARGEMENT DÉCALÉ DES VÉHICULES ÉLECTRIQUES À UNE STATION DE CHARGE

(30) Priorität: 28.09.2017 DE 102017122619; 19.10.2017 DE 102017124469
(43) Veröffentlichungstag der Anmeldung: 05.08.2020
(73) Patentinhaber: ChargeX GmbH, 80687 München (DE)
(72) Erfinder: MASNITZA, Michael, 90473 Nürnberg (DE); WAGNER, Tobias, 81735 München (DE); ENGELN, Johannes, 85053 Ingolstadt (DE)
(74) Vertreter: Kehl, Ascherl, Liebhoff & Ettmayr Patentanwälte Partnerschaft mbB
(86) Internationale Anmeldenummer: PCT/EP2018/076158
(87) Internationale Veröffentlichungsnummer: WO 2019/063633

(56) Entgegenhaltungen:
- EP-A1- 2 875 986
- EP-A1- 3 184 353
- WO-A2-2012/095128
- DE-A1-102013 224 735
- US-A1- 2010 134 067
- US-A1- 2013 314 037

## Beschreibung

Die vorliegende Erfindung bezieht sich gemäß Ansprüchen 1 und 3 auf eine Vorrichtung zum Aufladen von Batterien von Elektrofahrzeugen, insbesondere Elektroautos und gemäß Anspruch 8 auf ein Verfahren zum zeitversetzten Aufladen einer Vielzahl zeitgleich über mindestens eine Anschlusseinrichtung an einer Ladeeinrichtung, insbesondere einer Vorrichtung gemäß Anspruch 1, angeschlossenen Elektrofahrzeuge und gemäß Anspruch 10 auf ein Computerprogrammprodukt.

### Hintergrund

Plug-in-Hybride (PHEV) sowie reine Elektrofahrzeuge (BEV) sind mit einer Traktionsbatterie ausgestattet, die Energie für den Antriebsstrang speichert. Diese muss in regelmäßigen Abständen aufgeladen werden. Dafür wird eine technische Einrichtung benötigt, die der internationalen Norm IEC 62196 für Ladeinfrastruktur für Elektrofahrzeuge entsprechen muss. Darin sind vier verschiedene Lademodi definiert, drei davon für das Laden mit ACWechselstrom und eine für DC-Gleichstrom.

Mode 1 spielt im Kfz-Bereich eine untergeordnete Rolle, da damit nur geringe Ladeleistungen ermöglicht werden. Der Fokus liegt hier bei e-Rollem oder e-Quads.

Bei Mode 2 handelt es sich um Ladeeinrichtungen mit fest-codierter Ladeleistung und betrifft häufig das sogenannte Notladekabel für Elektroautos oder auch mobile Ladestationen. Um die Kommunikation zum Fahrzeug herzustellen wird eine ICCB (in-cable control box) benötigt, die dem Fahrzeug die feste, maximale Ladeleistung kommuniziert.

Mode 3 Ladeeinrichtungen bieten die Möglichkeit Elektrofahrzeuge mit Wechselstrom ein-oder dreiphasig aufladen zu können. Die Ladeeinrichtung kommuniziert dabei mit dem Elektrofahrzeug durch ein PWM Signal (Pulsweitemodulation). Die Ladestation kann dadurch die Ladeleistung verändern und ermöglicht dadurch gesteuertes Laden. Im privaten Umfeld sind maximale Ladeleistungen von 22 kW (32A dreiphasig) üblich und der Standard.

Mode 4 betrifft das Laden mit Gleichstrom mit bis zu 400A.

Für das Aufladen von Elektrofahrzeugen gibt es derzeit zwei wichtige Bereiche:
DCLadeeinrichtungen mit hohen Ladeleistungen zum Aufladen in kurzer Zeit (z.B. an AutobahnRaststätten) sowie das Aufladen via AC-Wechselstrom im privaten, semi-öffentlichen und öffentlichen Umfeld. Andere Ladelösungen, wie etwa Notladekabel und mobile Ladeeinrichtungen, spielen eine untergeordnete Rolle beim regelmäßigen Aufladen von Elektrofahrzeugen.

Der aktuelle Standard bei AC-Ladevorgängen in Hinsicht auf die Ladeleistung ist 22 kW. 4 Faktoren bestimmen stets dabei die maximale Ladeleistung: On-Board-Ladegerät des Elektrofahrzeugs, die Ladeeinrichtung vor Ort, das Verbindungskabel sowie verfügbare Leistung auf Infrastrukturseite. Da Ladestationen von der Ladeleistung jedoch nach unten kompatibel sind, hat sich der zukunftssichere Standard von 22 kW etabliert. Üblich sind hier sogenannte Wallboxen, die auf einem Standfuß oder als Wandmontage installiert werden. Im öffentlichen Bereich gibt es auch massivere Ausführungen in Form von einbetonierten Standsäulen.

Der Ladestationen werden am Niederspannungsnetz angeschlossen. Relevante Bauteile, die fast in jeder Ladestation verbaut werden, sind Leistungsschutzschalter (LS), Fehlerstromschutzschalter (FI) mit Typ B oder alternativ Typ A Elektrofahrzeug Charakteristik (sofern nicht bereits in der Vorinstallation vorhanden), Schütz zum Schalten der Last, Charge-Controller zur Kommunikation mit dem Fahrzeug, Ladebuchse bzw. alternativ ein angeschlagenes Kabel.

Ein weiteres Feature, das optional angeboten wird, ist eine Schnittstelle zur externen Überwachung und Steuerung der Ladestation. Die Kommunikation mit einem Backend wird über OCPP geregelt (Open Charge Point Protokoll), aktuell in der Version 1.6. Dadurch können Ladedaten von der Ladestation übermittelt und ausgewertet werden.

OCPP ermöglicht aber auch Lastmanagement, also das Regeln der Ladeleistung. Dies ist insbesondere wichtig, wenn die verfügbare Leistung am Ladeort nicht zum Laden von mehreren Elektroautos gleichzeitig ausreicht und die Ladeleistung entsprechend reduziert werden muss.

Beim Lastmanagement werden zwei verschiedene Systeme unterschieden:
Statisches Lastmanagement: Den Ladestationen wird eine fest definierte Last vorgehalten, die nicht überschritten werden darf. Um dies darzustellen, benötigt man ein externes Lastmanagementsystem, das die Ladepunkte steuert und dabei stets die maximale Last überwacht. Alternativ kann ein solches System auch durch ein Master-Slave-System und durch Kommunikation zwischen den Wallboxen umgesetzt werden.

Dynamisches Lastmanagement: Die verfügbare Last, die nicht überschritten wird, hängt von dynamischen Faktoren ab, wie beispielsweise dem Energieverbrauch im Gebäude. Ein externes Lastmanagement bekommt die Information über den Gebäudestromverbrauch und legt anschließend fest, wie viel Last noch zum Laden der Elektrofahrzeuge zur Verfügung steht. Anschließend wird die Ladeleistung entsprechend reduziert, um den Gesamtstromverbrauch maximal auszulasten.

Wichtig ist hierbei zu beachten, dass jeder lastgesteuerte Ladepunkt trotzdem dazu fähig sein muss, mit voller Ladeleistung zu laden. Daher müssen auch die Anschlusskabel stets maximal dimensioniert sein und die Absicherung auf die volle Leistung ausgelegt sein.

Ein wichtiger Einflussfaktor vor Inbetriebnahme einer Ladestation, ist deren Installation. Zum einen muss die Ladestation entsprechend befestigt werden, aber auch die Verlegung der Stromkabel von einem Verteilerkasten bis zum Ladepunkt muss erfolgen. Der Aufwand hängt hier maßgeblich von den örtlichen Gegebenheiten ab. Im einfachsten Falle liegt bereits eine CEE-Industriesteckdose am Ladepunkt, im ungünstigsten Falle sind Wanddurchbrüche und Grabungsarbeiten notwendig. Die Installationskosten können in manchen Fällen den Preis einer Ladestation um ein Vielfaches übersteigen. Auch bei der Aufrüstung um weitere Ladepunkte können daher hohe Folgekosten entstehen.

Ferner ist aktuell die mangelnde Auslastung von Ladestationen nachteilig. Derzeit ist es der Standard, dass pro Elektrofahrzeug eine vollwertige Ladestation installiert wird. Diese Ineffizienz macht den Aufbau von Ladeinfrastruktur sehr kostenintensiv. Durch die geringe, durchschnittliche Fahrleistung eines Autos und die steigenden AC-Ladeleistungen der Elektrofahrzeuge, ist die Standzeit von Elektroautos deutlich länger als die benötigte Ladezeit, um den Tagesbedarf zu decken. Elektrofahrzeuge werden jetzt und auch in Zukunft in den meisten Fällen über einen längeren Zeitraum geladen, z.B. über Nacht Zuhause oder tagsüber am Arbeitsplatz. Eine Ladestation wäre dadurch im Stande, mehr als ein Elektrofahrzeug aufzuladen. Das Umparken und Umstecken der Fahrzeuge ist im Alltag jedoch nicht darstellbar.

Ein weiterer Kritikpunkt an der aktuellen Situation betrifft die Installation von weiteren Ladepunkten. Wie zuvor erwähnt, entstehen hier unkalkulierbare Kosten. Hier ist eine detaillierte Zukunftsplanung notwendig, um die entsprechenden Stromleitungen für zukünftige Ladepunkte vorzubereiten. Dies stellt sich in den meisten Fällen als sehr schwierig dar und macht die Integration von weiteren Ladepunkten kompliziert. Auch ist stets eine geschulte Elektrofachkraft notwendig, um die Installation durchzuführen.

Die Druckschrift EP2875986A1 betrifft eine Vorrichtung zum Laden mindestens eines Elektrofahrzeugs. Die Vorrichtung umfasst mindestens ein erstes elektrisches Verbindungselement, ausgelegt und eingerichtet, um die Vorrichtung mit einem Stromnetz zu verbinden, und mindestens ein zweites und/oder mindestens ein drittes elektrisches Verbindungselement, ausgelegt und eingerichtet, um die Vorrichtung mit mindestens einem Elektrofahrzeug zu verbinden, wobei mindestens eine Regelungseinrichtung, umfasst ist, die ausgelegt und eingerichtet ist, um während eines Ladevorgangs Messwerte repräsentativ für die Spannung und/oder die Temperatur mindestens eines Akkumulators mindestens eines mit dem mindestens einen zweiten und/oder dritten Verbindungselement verbindbaren oder verbundenen Elektrofahrzeugs zu messen und/oder Schwellwerte für den Ladestrom und/oder die Ladespannung von dem mindestens einen Elektrofahrzeug zu empfangen und/oder mittels mindestens einer Eingabeeinrichtung bereitgestellt Schwellwerte zu erfassen, und die individuelle Ladespannung und/oder der individuellen Ladestrom an jedem der zweiten und/oder dritten Verbindungselementen in Abhängigkeit der erfassten Messwerte, der erfassten Schwellwerte und/oder der bereitgestellten Schwellwerte zu steuern oder zu regeln, wobei die Summe der Ladeströme der zweiten und/oder dritten Verbindungselemente kleiner oder gleich einem vorgegebenen Maximalwert ist.

Die Druckschrift WO2012/095128 offenbart ein System zum Aufladen von Batterien in Fahrzeugen. Das System umfasst dabei eine Mehrzahl an Ladegeräte, die jeweils in einem zugeordneten Fahrzeug zum Aufladen einer Batterie des jeweiligen Fahrzeuges angeordnet sind, wobei die Ladegeräte jeweils dazu ausgebildet sind, ein Ladeprofil für die zugeordnete Batterie zu ermitteln und an eine Lastmanagementeinheit zu übermitteln, die dazu ausgebildet ist, anhand der übermittelten Ladeprofile eine Leistungsverteilung an die Ladegeräte zu ermitteln. US 2013/314037 A1 offenbart eine Ladeeinrichtung zum zeitversetzten Aufladen einer Vielzahl zeitgleich an der Vorrichtung angeschlossener Elektrofahrzeuge gemäss dem Stand der Technik. DE 10 2013 224735 A1 offenbart eine Ladevorrichtung zum zeitgleichen Aufladen von Batterien von Elektrofahrzeugen, wobei Ladekabel ineinandergesteckt werden können. Stets nur ein einziges Elektrofahrzeug kann geladen werden.

Weitere den technologischen Hintergrund der vorliegenden Erfindung betreffende Gegenstände werden durch die Druckschriften EP3184353A1 und US2010/134067A1 offenbart.

### Aufgabe der Erfindung

Es ist die Aufgabe der vorliegenden Erfindung eine Vorrichtung zum Aufladen von Batterien von Elektrofahrzeugen bereitzustellen, die mindestens einen aus dem Stand der Technik bekannten Nachteil ausräumt oder reduziert. Bevorzugt soll die Vorrichtung mehr Komfort zu geringeren Kosten bieten.

### Beschreibung der Erfindung

Die zuvor genannte Aufgabe wird gemäß Anspruch 1 durch eine Vorrichtung zum Aufladen von Batterien von Elektrofahrzeugen gelöst. Erfindungsgemäß umfasst die Vorrichtung bevorzugt mindestens eine Ladeeinrichtung zum zeitversetzten Aufladen einer Vielzahl zeitgleich an der Vorrichtung angeschlossener Elektrofahrzeuge, insbesondere Elektroautos oder Elektrozweiräder, wie Elektrofahrräder, Elektroroller, Elektromotorräder. Die Ladeeinrichtung weist dabei eine Ladestation zum Bereitstellen eines Ladestroms auf und die Ladeeinrichtung weist eine Strombereitstellungseinrichtung auf. Ferner ist mindestens eine Anschlusseinrichtung zum Anschließen der Vielzahl an Elektrofahrzeugen vorhanden, wobei die Anschlusseinrichtung eine erste Input-/Outputeinheit und eine damit über eine Schaltungsanordnung verbundene zweite Input-/Outputeinheit aufweist, wobei die zweite Input-/Outputeinheit mindestens zwei Anschlussstecker zum Anschließen von jeweils einem Elektrofahrzeug undloder einer weiteren Anschlusseinrichtung aufweist, wobei jeder Anschlussstecker zum Erzeugen einer Datenverbindung undloder Stromverbindung zwischen dem daran angeschlossenen Elektrofahrzeug und der Strombereitstellungseinrichtung dient, wobei die Strombereitstellungseinrichtung bewirkt, dass die Ladestation den Ladestrom bevorzugt dauerhaft an die Anschlusseinrichtung bereitstellt, und in Abhängigkeit von mindestens einem vordefinierten Steuerungsparameter den Ladestrom durch eine Ansteuerung der Schaltungsanordnung genau einem Anschlussstecker zuführt.

Diese Lösung ist vorteilhaft, da sie ein modulares Ladekonzept als Erweiterung für Ladestationen schafft. Es können somit mit derselben Ladestation sequentiell mehrere zeitgleich angeschlossene Elektrofahrzeuge, insbesondere Elektroautos, geladen werden.

Das zuvor genannte Problem wird somit insbesondere durch die Automatisierung des Umsteckvorgangs, der benötigt wäre, wenn mehrerer Autos an einer Ladestation laden möchten, gelöst.

Die erfindungsgemäße Ladelösung ist bevorzugt auf den Bereich der Mode 3 Ladevorgänge gerichtet. In diesem Bereich gibt es eine Unterscheidung nach Steckertypen. Für das Laden mit 3 Phasen gibt es den sogenannten Typ 2 Mennekes Stecker, der in der Typ 2: EN 62196-2 geregelt wird. Dieser kann mit bis zu 63A laden und bietet neben den drei Phasen weitere Kontakte für Masse, Neutralleiter und die beiden Kommunikationspins zur Übermittlung des PWM-Signals. Der Typ 2 Stecker ist der Standard bei europäischen Fahrzeugen. Sofern eine Ladestation nicht mit einem angeschlagenen Typ 2 Ladekabel ausgerüstet ist, sondern mit einer Steckdose, wird ein Ladekabel zur Verbindung benötigt.

Der Typ 1 Stecker (auch Yazaki genannt) ähnelt durch die beiden Kommunikationspins grundsätzlich dem Typ 2 Stecker, ist jedoch auf einphasiges Laden ausgerichtet. Hier greift die SAE J1772-2009 Norm. Dieser Stecker ist der Standard in Asien und Nordamerika, da dort auch die Stromnetze einphasig sind. Fahrzeuge, die mit eine Typ 1 Ladebuchse ausgestattet sind, können an Ladestationen mit angeschlagenem Typ 1 Ladekabel laden. Alternativ funktioniert das Aufladen auch an einer Ladestation mit Typ 2 Steckdose, hierfür wird jedoch ein entsprechendes Adapterkabel benötigt.

Die erfindungsgemäße Lösung eignet sich aber grundsätzlich auch für Mode 4 Ladevorgänge mit Gleichstrom (DC). In diesem Bereich unterscheidet man zwei Systeme. Das Combined Charging System (CCS) basiert in Europa (CCS2) auf dem Typ2-Stecker und verwendet dessen drei Erdungs- und Signalkontakte. Dieser Stecker wird unterhalb um 2 Kontakte zum Laden von Gleichstrom erweitert und erfordert dadurch spezielle Fahrzeugkupplungen und autoseitig Fahrzeugstecker. Es kommt der IEC-62196-Lademodus 4 zur Anwendung. Gemäß IEC 61851-1 ist das Ladekabel und die Fahrzeugkupplung dabei fest mit der Ladesäule verbunden und wird am Fahrzeug gesteckt. Für den amerikanischen Markt gibt es auch ein CCS1 System, das ähnlich aufgebaut ist. Der einzige Unterschied besteht darin, dass es auf dem Typ 1 Stecker (SAE J1772) basiert und dessen drei Erdungs- und Signalkontakte verwendet. Das Kommunikationsprotokoll ist identisch mit dem europäischen CCS2 System.

Für den asiatischen Markt gibt es den CHAdeMO-Stecker, der sich grundsätzlich auch für das Ladesystem eignet. Das Kommunikationsprotokoll basiert hierbei auf einem Zwei DrahtCAN-Bus System und die Leistungsversorgung erfolgt über zwei weitere Signalkontakte. Das CHAdeMO Protokoll erfüllt die ISO-Normen ISOIIEC 61851-23 und ISOIIEC 61851-24 und ist im Vergleich zum Combined Charging System nicht kompatibel mit anderen Ladesteckern.

Werden die erfindungsgemäßen Vorrichtungskomponenten bzw. die erfindungsgemäße Vorrichtung zur DC Ladestrombereitstellung, insbesondere nach Mode 4, verwendet, so erfolgt die Ladung bevorzugt gemäß der Norm IEC 62196-3.

Somit handelt es sich bei den Anschlusssteckern bevorzugt um Typ 2 Mennekes Stecker, Typ 1 (Yazaki) Stecker, CCS1, CCS2 oder CHAdeMO Stecker.

Darüber hinaus können z.B. als Bestandteil der Ladestation oder der Strombereitstellungseinrichtung beliebig weitere Bauteile installiert werden, wie z.B. ein Display oder Authentifizierungsmöglichkeiten, z.B. basierend auf RFID, insbesondere mittels NFC.

Konkret wird somit eine intelligente Verteilereinheit für die Automatisierung des Umsteckvorgangs bereitgestellt. Diese wird als Erweiterung an einer Ladestation, insbesondere über die Typ 2 Steckdose, angebracht und ermöglicht es mehreren Elektroautos sich über eine Vielzahl an Anschlusseinrichtungen an der Vorrichtung anzuschließen. Die Ausgänge der Vorrichtung bzw. Verteileinheit werden an je einem Parkplatz angebracht. So kann die Vorrichtung mehrere Parkplätze bedienen. Bevorzugt ordnet dabei ein besonders bevorzugt vorinstallierter Ladealgorithmus zu, in welcher Reihenfolge die Elektrofahrzeuge geladen werden. Es wird hierbei besonders bevorzugt immer nur exakt ein Auto geladen, dies ist bevorzugt sowohl im Algorithmus, als auch auf Hardwareseite durch die Schaltung sichergestellt. Die Vorrichtung ist dabei modular erweiterbar. Es können also mehrere, insbesondere beliebig viele, weitere Ausgänge in Reihe hinzugefügt werden. Bevorzugt weist die Vorrichtung mindestens oder genau 2 Anschlussstecker zum Anschließen von Elektrofahrzeugen auf und bevorzugt weist die Vorrichtung mindestens oder genau oder bis zu 3 oder mindestens oder genau oder bis zu 5 oder mindestens oder genau oder bis zu 10 oder mindestens oder genau oder bis zu 15 oder mindestens oder genau oder bis zu 20 Anschlussstecker auf. Bevorzugt bildet jedoch jede Anschlusseinrichtung genau einen Anschlussstecker zum Anschließen eines Elektrofahrzeugs aus.

Die Vorrichtung, insbesondere das Hauptmodul und die Anschlusseinrichtunglen, ist bevorzugt auf den Standard von 22 kW Wechselstrom ausgelegt. Das Hauptmodul, dass an eine Ladestation angeschlossen wird, simuliert der Ladestation dabei bevorzugt mittels Pulsweitenmodulation und/oder mittels Spannungsabfall durch das Schalten verschiedener Widerstände ein Elektrofahrzeug und die Ladestation versorgt dadurch das Hauptmodul mit Leistung, insbesondere mit maximal 22 kW, wobei die Ladestation dem Hauptmodul bevorzugt mittels Pulsweitenmodulation die maximal verfügbare Ladeleistung mitteilt.

Ist das Hauptmodul als Teil einer Ladestation verbaut, dann stellt das Hauptmodul selbst eine vollwertige Ladestation dar. Die gesamte Kommunikation erfolgt dabei bevorzugt softwarebasiert auf dem Master Charge Controller 42.

Das Hauptmodul ist dabei bevorzugt mit einem Typ 2 Stecker ausgestatte und ist besonders bevorzugt aufgrund der IEC 62196 Norm kompatibel mit allen gängigen Mode 3 Ladestationen.

Weitere bevorzugte Ausführungsformen sind Gegenstand der Unteransprüche und/oder der nachfolgenden Beschreibungsteile.

Die Vorrichtung weist mehrere miteinander funktional und mechanisch gekoppelte Anschlusseinrichtungen auf, wobei die Anschlusseinrichtungen in einer Reihenschaltung angeordnet sind.

Die Reihenschaltung erfolgt über eine Leitung, bevorzugt ein Verbindungskabel. Diese überträgt:
- Den Ladestrom
- Die Kommunikation zwischen dem Hauptmodul und den Anschlusseinrichtungen, wobei diese Kommunikation bevorzugt eine digitale Datenverbindung bzw. Datenübertragung darstellt.
- Signale für die Hardware Redundancy (Steuerungsleitung), wobei die Signale bevorzugt durch definierte Logikwerte, insbesondere 0 und 1, repräsentiert werden oder durch definierte Versorgungsspannungswerte repräsentiert werden.

Das Verbindungskabel ist somit bevorzugt ein Hybridkabel aus einer Stromleitung bzw. einem Stromstrang für den Ladestromund einer Versorgungsleitung bzw. Steuerungsleitung für die Hardware Redundancy. Es ist möglich, dass die Stromleitung auch zur Umsetzung der Datenübertragung verwendet wird, dies erfolgt bevorzugt zeitgleich. Bevorzugt weist das Verbindungskabel jedoch ebenfalls eine Kommunikationsleitung bzw. einen Kommunikationsstrang bzw. einen Strang zur Kommunikation auf.

Die Leitungen haben bevorzugt jeweils mehrere Stränge, die bevorzugt alle zusammen in einem Kabel konfektioniert sind. Die Kommunikations- und/oder Steuerungsleitung istlsind von der Stromleitung abgeschirmt.

Das Ladesystem ist somit modular aufgebaut, d.h. es können beliebig viele Erweiterungsmodule (Anschlusseinrichtungen) angeschlossen werden. Durch den seriellen Charakter des Systems wird immer ein Auto nach dem anderen geladen, eine gleichzeitige Ladung ist bevorzugt aufgrund einer Hardware Redundancy nicht möglich. Somit können zum Beispiel in bei 11kW Ladeleistung und einer 22kWh Batterie der Autos in ca. 8 Stunden 4 Autos komplett vollgeladen werden. Da Elektrofahrzeuge aber nie komplett leer an der Ladestation bzw. Vorrichtung ankommen, können rein theoretisch 5 - 8 dieser Autos in 8 Stunden geladen werden. Bei 22kW erhöht sich entsprechend die Anzahl der Autos, bei höherer Batteriekapazität der Autos verringert sich das Optimum der Module in der Reihe.

Die Datenverbindung zwischen dem jeweiligen Anschlussstecker und der Strombereitstellungseinrichtung besteht gemäß einer weiteren bevorzugten Ausführungsform der vorliegenden Erfindung dauerhaft und die Stromverbindung wird mechanisch in Abhängigkeit des mindestens einen Steuerungsparameter erzeugt. Diese Ausführungsform ist vorteilhaft, da über die Datenverbindung Parameter des jeweiligen Elektrofahrzeugs und der jeweiligen Anschlusseinrichtung erfasst und weiterverarbeitet werden können. Diese Parameter können somit während des Aufladens des jeweiligen Elektrofahrzeugs aber auch vor oder nach dem Aufladen erfasst und weiterverarbeitet, insbesondere ausgewertet, werden.

Die Schaltungsanordnung weist gemäß der vorliegenden Erfindung Schalter, insbesondere Schütze, zum mechanischen Erzeugen der Stromverbindung auf, wobei eine Betätigung eines Schalters von der Strombereitstellungseinrichtung bewirkbar ist. Die Strombereitstellungseinrichtung steuert dabei bevorzugt einen Aktuator, insbesondere einen Elektromotor, an, wobei der Aktuator den Schalter zumindest aus einer ersten Stellung in eine zweite Stellung oder aus der zweiten Stellung in die erste Stellung überführt bzw. bewegt. Bevorzugt ist der Schalter nur genau zwischen zwei Stellungen schaltbar. Alternativ ist es jedoch ebenfalls möglich, dass der Schalter mehr als zwei, insbesondere 3 oder mehr als 3, insbesondere 4 oder mehr als 4, insbesondere bis zu 10 Stellungen, einnehmen kann. Der Aktuator ist hierbei besonders bevorzugt Teil eines elektromagnetischen Schützes.

Der vordefinierte Steuerungsparameter wird gemäß einer weiteren bevorzugten Ausführungsform der vorliegenden Erfindung zumindest durch die Ladekapazität, den Ladegrad, den Ladestrom, den Anschlusszeitpunkt an den Anschlussstecker, eine Fahrzeugidentifikation, eine Fahreridentifikation, eine Besitzeridentifikation und/oder ein Priorisierungskriterium definiert wird. Diese Lösung ist vorteilhaft, da je nach Einsatzszenario (z.B. Nutzung im öffentlichen Raum oder in einer Unternehmensumgebung oder im privaten Umfeld) sehr abgestimmt auf die Bedürfnisse der jeweiligen Kunden die Ladestrombereitstellung regelbar ist. Elektroautofahrer können sich nun beliebig an den Haupt- und Erweiterungsmodulen anschließen. Der Ladevorgang wird dabei bevorzugt vollautomatisch, insbesondere parametergesteuert, gestartet, je nach Einsatzfall z.B. sofort oder zu einem späteren Zeitpunkt. Kernelement ist dabei bevorzugt das sequentielle Lademanagement bzw. Lastmanagement. Darunter wird verstanden, dass zu jedem Zeitpunkt nur ein Elektrofahrzeug mit voller Leistung geladen wird, während sich die anderen Fahrzeuge in einem Wartemodus befinden. Dies kann z.B. durch einen First-Come-First-Serve Ladealgorithmus, als auch explizit durch die Schaltung selbst in einer Hardware Redundancy gewährleistet werden. Die Schalter, insbesondere Schütze, der Ladepunkte sind jeweils bevorzugt so verkabelt, dass rein physikalisch zu jedem Zeitpunkt nur ein Schalter, insbesondere Schütz, angezogen ist. Dadurch wird vermieden, dass die maximal verfügbare Ladeleistung der vorangestellten Ladestation überschritten wird.

An die Anschlusseinrichtung ist gemäß einer weiteren bevorzugten Ausführungsform der vorliegenden Erfindung mindestens eine weitere Anschlusseinrichtung angeschlossen, wobei jede der Anschlusseinrichtungen Steuerungsparameterdaten zu dem mindestens einen Steuerungsparameter und Hauptparameterdaten erzeugen und zumindest an die Strombereitstellungseinrichtung und bevorzugt ebenfalls an die mindestens eine andere Anschlusseinrichtung übermittelt. Sind mehr als zwei Anschlusseinrichtungen vorgesehen, so tauschen bevorzugt alle Anschlusseinrichtungen untereinander und mit der Strombereitstellungseinrichtung bzw. einem Hauptmodul Steuerungsparameterdaten und/oder Hauptparameterdaten aus. Die Hauptparameterdaten repräsentieren hierbei bevorzugt mindestens einen Hauptparameter und bevorzugt mehrere Hauptparameter, wobei die Hauptparameter zumindest eine individuelle Identifikationsnummer der Anschlusseinrichtung undloder den Status der Anschlusseinrichtung undloder die physische Position in einer Hauptschaltungsanordnung umfasst, wobei sich die Hauptschaltungsanordnung aus der Gesamtheit der mehreren Schaltungsanordnungen der einzelnen Anschlusseinrichtungen ergibt. Diese Ausführungsform ist vorteilhaft, da genau zugeordnet werden kann, welches Elektrofahrzeug wo angeschlossen ist und welche Eigenschaften hat.

Die Strombereitstellungseinrichtung ist gemäß der vorliegenden Erfindung Bestandteil der Ladestation oder die Strombereitstellungseinrichtung ist Bestandteil eines mit der Ladestation und mindestens einer Anschlusseinrichtung koppelbaren Hauptmoduls. Diese Ausführungsform ist vorteilhaft, da die Ladestation mit integrierter Strombereitstellungseinrichtung ausgerüstet sein kann oder bestehende Ladestationen mit einem Hauptmodul und einer gewünschten Anzahl an Anschlusseinrichtungen nachrüstbar ist.

Es wird ebenfalls ein Hauptmodul zum Verbinden von einer Ladestation zum Laden von Elektrofahrzeugen mit mindestens einer Anschlusseinrichtung zum zeitgleichen Anschließen von einer Vielzahl an Elektrofahrzeugen, insbesondere zur Verwendung in einer Vorrichtung gemäß einem der vorrangegangenen Ansprüche, vorgeschlagen.

Das Hauptmodul umfasst dabei bevorzugt mindestens eine Ladestationskopplungsstelle zum Ankoppeln an einer Ladestation, wobei über die Ladestationskopplungsstelle Ladestrom aufnehmbar ist und Ladestationsdaten und/oder Ladestationssignalen austauschbar sind, mindestens eine Anschlusseinrichtungskopplungsstelle zum Ankoppeln einer Anschlusseinrichtung, wobei über die Anschlusskopplungsstelle der Ladestrom weiterleitbar ist und Anschlussdaten und/oder Anschlusssignalen austauschbar sind, eine Daten-und/oder Signalgebereinheit zum Erzeugen von über die Ladestationskopplungsstelle ausgebbaren Ladestationsdaten und/oder Ladestationssignalen, insbesondere zum Simulieren eines angeschlossenen Fahrzeugs, und zum Erzeugen von über die Anschlusseinrichtungskopplungsstelle ausgebbaren Anschlussdaten und/oder Anschlusssignalen, insbesondere zum Simulieren eines angeschlossenen Fahrzeugs, und eine Steuereinrichtung zum Bereitstellen von Steuerungsdaten und/oder Steuerungssignalen zum Ansteuern der Anschlusseinrichtung. Das Hauptmodul, die Ladestation und die Anschlusseinrichtungen sind voneinander abgrenzbare Einrichtungen sind und diese sind somit individuell modifizierbar und/oder bereitstellbarstnr . Die Anschlussdaten und/oder Anschlusssignale und die Ladestationsdaten und/oder Ladestationssignale werden mittels Pulsweitenmodulation erzeugt und/oder an die anderen Anschlusseinrichtungen oder das Hauptmodul übermittelt.

Es wird ebenfalls eine Anschlusseinrichtung zum Anschließen von Elektrofahrzeugen an ein Hauptmodul nach Anspruch 8 oder zum Anschließen von Elektrofahrzeugen an eine Ladeeinrichtung, insbesondere zur Verwendung in einer Vorrichtung gemäß einem der vorrangegangenen Ansprüche vorgeschlagen; die Anschlusseinrichtung umfasst dabei bevorzugt mindestens eine erste Input-/Outputeinheit und eine zweite Input-/Outputeinheit, wobei die erste Input-/Outputeinheit und die zweite Input-/Outputeinheit über eine Schaltungsanordnung miteinander verbunden sind, wobei die erste Input-/Outputeinheit zum Verbinden mit einer Strombereitstellungseinrichtung ausgebildet ist, wobei die zweite Input-/Outputeinheit mindestens zwei Anschlussstecker zum Anschließen von jeweils einem Elektrofahrzeug und/oder einer weiteren Anschlusseinrichtung aufweist, wobei jeder Anschlussstecker zum Erzeugen einer Datenverbindung und/oder Stromverbindung zwischen dem daran angeschlossenen Elektrofahrzeug und einer an der ersten Input-/Outputeinheit ankoppelbaren Einrichtung, insbesondere einer weiteren Anschlusseinrichtung oder einem Hauptmodul, dient, und eine Kommunikationseinrichtung, insbesondere Slave Charge Controller, zum Verarbeiten von über die zweite Input-/Outputeinheit empfangenen Fahrzeugsignale und/oder Fahrzeugdaten und zum Erzeugen von über die zweite Input/Outputeinheit an eine weitere Anschlusseinrichtung und/oder ein Elektrofahrzeug übermittelbare Fahrzeugsignale und/oder Fahrzeugdaten.

Das Hauptmodul und die Anschlusseinrichtung bilden zusammen eine Adapterlösung bzw. modulare Lösung für bestehende Ladestationen aus. Das Hauptmodul wird an einer bestehenden oder neu installierten Ladestation, insbesondere mit einem Typ-2 Kabel, angeschlossen. Das Hauptmodul besitzt dabei bevorzugt genau einen Ladepunkt für genau ein Elektroauto. Die Anschlusseinrichtung kann als Erweiterungsmodul, bevorzugt "plug & play", an das Hauptmodul angeschlossen werden, die Anschlusseinrichtung funktioniert hierbei auch als Ladepunkt. An diese Anschlusseinrichtung kann wiederum eine weitere Anschlusseinrichtung angeschlossen werden, etc. Hieraus resultiert somit ein System, welches modular um weitere Ladepunkte erweitert werden kann. Die einzelnen Einrichtungen (Hauptmodul und Anschlusseinrichtung/en) kommunizieren dabei bevorzugt untereinander. Bevorzugt kommuniziert jede Anschlusseinrichtung zumindest mit dem Hauptmodul und besonders bevorzugt ebenfalls mit mindestens einer unmittelbar daran angeschlossenen weiteren Anschlusseinrichtung, insbesondere mit allen Anschlusseinrichtungen. Durch diese Kommunikation der Einrichtungen (Hauptmodul und Anschlusseinrichtungen) wird sichergestellt, dass zu jedem Zeitpunkt besonders bevorzugt nur genau ein Elektrofahrzeug lädt, d.h. nur ein Elektrofahrzeug von der Ladestation mit Strom bzw. Ladestrom versorgt wird. Zum einen garantiert dies die Software, besonders der Ladealgorithmus, indem die Ladereihenfolge immer genau maximal ein Auto zum Laden zum jeweiligen Zeitpunkt festlegt. Mit der Hardware Redundancy in der Steuerleitung wird dieses auch hardwareseitig garantiert. Die Hardware Redundancy ist eine Hardwareschaltung mit Komponenten in bevorzugt jedem Modul, die über das gesamte System hinweg sicherstellt, dass die gewünschte Anschlussleistung eingehalten wird, auch wenn mehrere Elektrofahrzeuge am System angeschlossen sind und damit ihre summierte maximale Ladeleistung höher als die Anschlussleistung sind.

Dazu werden alle Relais im System, bzw. alle Schalter, besonders Schütze und Relais, die dieselbe Phase, besonders der Stromführenden Leitung, schalten, über die Hardware Redundancy gekoppelt. Die Hardware Redundancy beschränkt die Schaltmöglichkeit der Schalter durch eine physikalische Anordnung, wie z.B. eine begrenzte Stromversorgung oder eine Logikschaltung, sodass nur maximal die gewünschte Anzahl an Schaltern zu einem Zeitpunkt schalten kann. So wird durch die Hardware Redundancy die Anschlussleistung physikalisch begrenzt und ein Softwarefehler kann nie zu einer Überlastung des festgelegten Netzanschlusses führen.

Besonders wenn die gewünschte Anschlussleistung genau der maximalen Ladeleistung eines modernen Elektroautos, von besonders bevorzugt 32A pro Phase, betragen soll, beschränkt die Hardware Redundancy das Laden aller Elektrofahrzeuge, die am System, also einer beliebigen Anschlusseinheit, angeschlossen sind, so, dass exakt ein Fahrzeug im System beim dreiphasigen Laden, bzw. ein Elektrofahrzeug pro Phase beim einphasigen Laden der Elektrofahrzeug, lädt.

Dadurch können sich mehrere Elektroautos an eine Ladestation anschließen bzw. angeschlossen werden und über einen längeren Zeitraum vollautomatisch, also ohne aktiven Eingriff eines Nutzers, aufgeladen werden.

Ferner wird die oben genannte Aufgabe durch ein Verfahren zum zeitversetztes Aufladen einer Vielzahl zeitgleich über mindestens eine Anschlusseinrichtung an einer Vorrichtung gemäß Anspruch 1, angeschlossenen Elektrofahrzeuge gelöst gemäss Anspruch 8.

Die Strombereitstellungseinrichtung wertet gemäß einer weiteren bevorzugten Ausführungsform der vorliegenden Erfindung die vordefinierten Steuerungsparameter aus und bestimmt daraus eine Ladestrombeaufschlagungsreihenfolge der einzelnen Anschlussstecker. Die Ladestrombeaufschlagungsreihenfolge wird dabei bevorzugt in Abhängigkeit von mindestens einem Priorisierungskriterium bestimmt. Den Elektrofahrzeugen sind dabei bevorzugt Priorisierungswerte des Priorisierungskriteriums zuweisbar, wobei die Strombereitstellungseinrichtung die Positionierungswerte der einzelnen Elektrofahrzeuge nach vorbestimmten Regeln abgleicht und daraus die Ladestrombeaufschlagungsreihenfolge bestimmt. Das Prioritätskriterium kann dabei die Nutzungshäufigkeit des Elektrofahrzeugs und/oder der Batterieladegrad und/oder der Zeitpunkt der nächsten Verwendung des Elektrofahrzeugs und/oder ein für eine nächste Verwendung des Elektrofahrzeugs vorbestimmter Strombedarf und/oder die physikalische Position des jeweiligen Anschlusssteckers des Elektrofahrzeugs sein bzw. repräsentieren. Im Falle der physikalischen Position wird bevorzugt zunächst das Elektrofahrzeug mit Strom versorgt, das an ein Modul angeschlossen ist, das schaltungstechnisch näher an der Ladestation angeschlossen ist bzw. das direkt an der Ladestation selbst angeschlossen ist. Alternativ kann das Prioritätskriterium der jeweilige Anschlusszeitpunkt eines Elektrofahrzeugs an einen Anschlussstecker sein bzw. repräsentieren, wobei die Ladestrombeaufschlagungsreihenfolge bevorzugt in Abhängigkeit des Anschlusszeitpunkts bestimmt wird (first in first out Prinzip).

Ferner wird die oben genannte Aufgabe erfindungsgemäß durch ein Computerprogrammprodukt zum Ausführen eines zuvor genannten Verfahrens gelöst.

Weitere Vorteile, Ziele und Eigenschaften vorliegender Erfindung werden anhand nachfolgender Beschreibung anliegender Zeichnungen erläutert, in welchen beispielhaft erfindungsgemäße Elemente, Mittel, Merkmale, Verfahrensschritte oder Systeme dargestellt sind. Elemente und Mittel der erfindungsgemäßen Einrichtungen und Verfahren, welche in den Figuren wenigsten im Wesentlichen hinsichtlich ihrer Funktion übereinstimmen, können hierbei mit gleichen Bezugszeichen gekennzeichnet sein, wobei diese Bauteile bzw. Elemente nicht in allen Figuren beziffert oder erläutert sein müssen. Nachfolgend wird die Erfindung rein beispielhaft anhand der beigefügten Figuren beschrieben. Darin zeigt:
- Fig. 1: schematisch eine Vorrichtung gemäß der vorliegenden Erfindung;
- Fig. 2: schematisch bevorzugte Komponenten eines Hauptmoduls;
- Fig. 3: schematisch bevorzugte Komponenten einer Anschlusseinrichtung;
- Fig. 4a: ein Beispiel dafür, wie die Bestimmung des aktuell zu ladenden Elektrofahrzeugs vorgenommen werden kann;
- Fig. 4b: ein weiteres Beispiel dafür, wie die Bestimmung des aktuell zu ladenden Elektrofahrzeugs vorgenommen werden kann;
- Fig. 5a: schematisch mehrerer miteinander über Schaltungsanordnungen verbundene Module (Ladestation und Hauptmodul und Anschlusseinrichtung)
- Fig. 5b: schematisch eine alternative Schaltungsanordnung;
- Fig. 5c: schematisch eine weitere alternative Schaltungsanordnung, wobei die Sicherheit des Systems hierbei durch Logikschaltungen und Transistoren bewirkt wird, und
- Fig. 6: schematisch Kommunikationspfade zwischen dem Hauptmodul und den Anschlusseinrichtungen und einem externen Akteur.

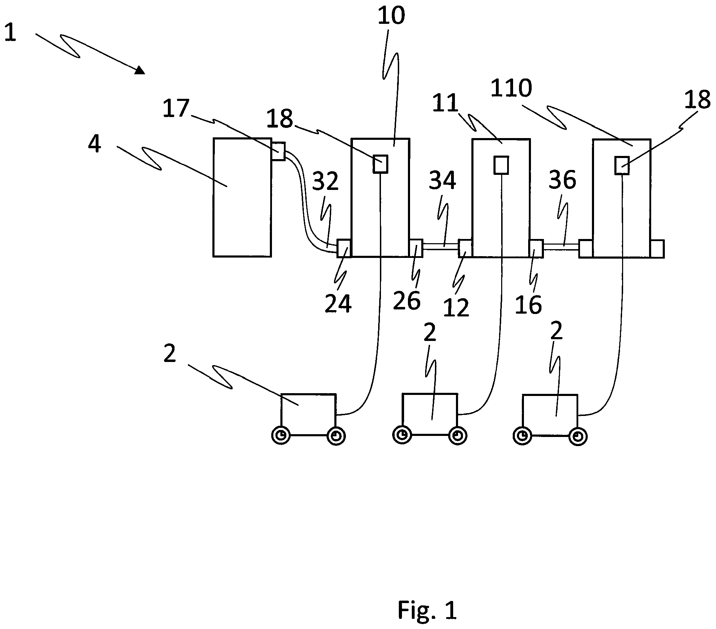

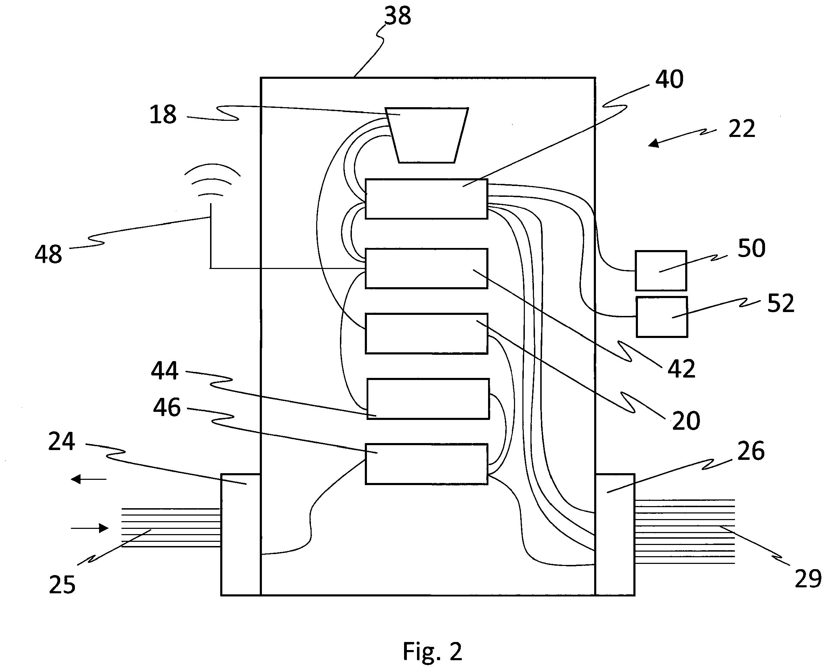

Fig. 1 zeigt eine erfindungsgemäße Vorrichtung 1, die zum zeitversetzten Laden von Elektrofahrzeugen 2 dient. Die Vorrichtung 1 umfasst dabei bevorzugt eine Ladeeinrichtung 4 zur Bereitstellung des Ladestroms. Die Ladeeinrichtung 4 umfasst dabei eine Ladestation 6 und eine Strombereitstellungseinrichtung (vgl. Fig. 2). An die Ladeeinrichtung 4 ist eine Anschlusseinrichtung 10 angeschlossen. An die Anschlusseinrichtung 10 ist wiederum eine weitere Anschlusseinrichtung 11 angeschlossen und an die weitere Anschlusseinrichtung 11 ist eine noch weitere Anschlusseinrichtung 110 angeschlossen. Es ist hierbei denkbar, dass nur genau 2 oder mindestens 2 oder mehr als die drei gezeigten Anschlusseinrichtungen miteinander verbunden werden. Die einzelnen Anschlusseinrichtungen 10, 11 und 110 sind dabei in Reihe geschaltet. Im gezeigten Beispiel muss somit der Strom von der Ladeeinrichtung 4 zunächst durch die Anschlusseinrichtungen 10 und 11 hindurch zur Anschlusseinrichtung 110 geführt werden, wenn das an die Anschlusseinrichtung 110 angeschlossene Elektrofahrzeug 2 geladen werden soll.

Das System bzw. die Vorrichtung 1 stellt somit eine erweiterbare Ladeeinrichtungsumgebung dar, die mit zusätzlichen Ladepunkten (Anschlusseinrichtungen 10, 11, 110) mit bevorzugt automatischer Ladesteuerung erweiterbar ist.

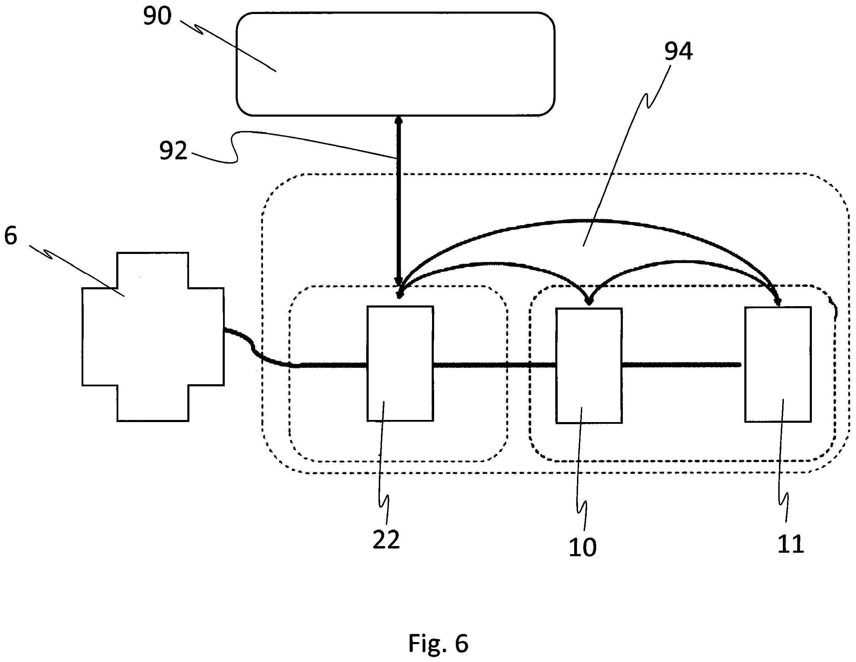

Das System bzw. die Vorrichtung 1 ist somit modular aufgebaut. Am Beispiel von Fig. 6 sieht man, dass ein Hauptmodul 22 (vgl. Fig. 2) an den Ladestationsstecker 17, insbesondere Typ-2 Stecker, der Ladestation 6 angeschlossen wird. An dieses Hauptmodul 22 wird dann eine Anschlusseinrichtung 10 bzw. ein Erweiterungsmodul angeschlossen, das über einen Ladepunkt bzw. Anschlussstecker 18 für ein Elektrofahrzeug 2, insbesondere Elektroauto, verfügt. An diese Anschlusseinrichtung 10 ist nun wieder eine weitere Anschlusseinrichtung 10 angeschlossen werden. Diese Erweiterung kann mit beliebig vielen Anschlusseinrichtungen 10, 11, 110 fortgeführt werden. Der Aufbau erfolgt in Reihe und orientiert sich bevorzugt an der Anzahl an verfügbaren Stellplätzen sowie der maximalen Ladeleistung der Elektroautos 2.

Das Hauptmodul 22 kommuniziert mit der Ladestation 4 als wäre es ein Elektroauto 2, insbesondere mittels Pulsweitenmodulation und/oder mittels Variation der Widerstände.

Die angesteckten Elektrofahrzeuge 2 werden sequentiell geladen, die Ladesteuerung, insbesondere der Ladealgorithmus bzw. Algorithmus, bestimmt in welcher Reihenfolge und wie lange geladen wird. Andere Elektrofahrzeuge 2 bzw. Autos werden dabei auf Stand-by gehalten.

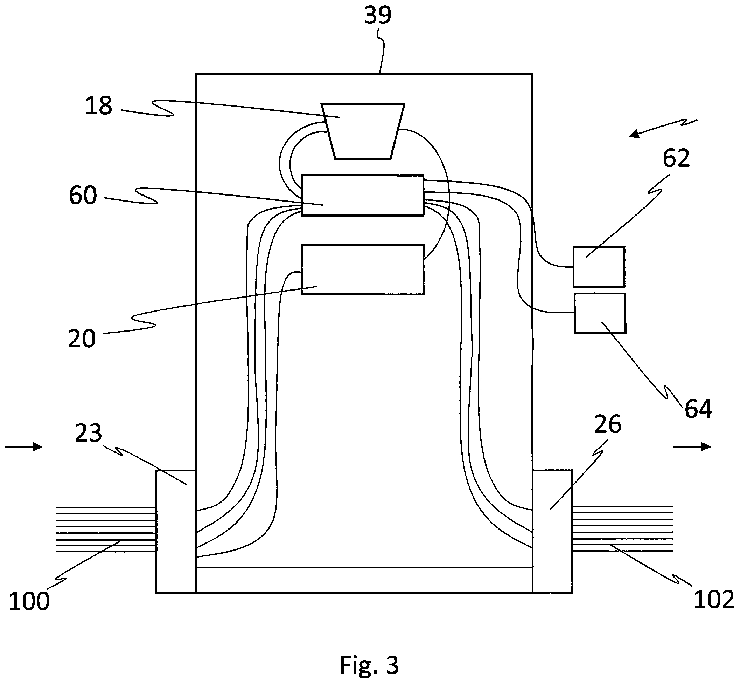

Das Laden erfolgt dabei bevorzugt über den Anschlussstecker 18, insbesondere den IEC 62196 Typ 2 Stecker nach der Norm IEC 62196 im Mode 3. Das bedeutet, dass der Stecker 18 dem Fahrzeug 2 über Pulsweitenmodulation (PWM) die mögliche Ladeleistung signalisiert. Das PWM-Signal wird von einem Charge Controller 40, 42 (vgl. Fig. 2 oder 3) jedes Moduls 10, 11, 22, 110 erzeugt.

Bevorzugt entscheidet ein intelligenter Ladealgorithmus, welches Auto 2 wie lange geladen wird. Der Nutzer kann dabei bevorzugt mehrere Kriterien festlegen, z.B. First-Come-FirstServe (Windhundprinzip) oder rotierend mit festen Zeitabständen oder rotierend mit festen Lademengen.

Alle Module (Hauptmodul 22 und Anschlusseinrichtungen 10, 11, 110) kommunizieren ihre Hauptparameter untereinander, das Hauptmodul 22 sammelt alle Parameter zur Kommunikation nach außen, wobei eine Kommunikation nach außen bevorzugt über eine Internetverbindung erfolgt.

Der modulare Aufbau ermöglicht eine einfache Nachrüstung von weiteren Anschlusseinrichtungen ohne die Notwendigkeit von geschultem Fachpersonal. Das System muss nur abgeschaltet werden und anschließend kann über ein definiertes Stecksystem ein weiteres Erweiterungsmodul bzw. eine weitere Anschlusseinrichtung 11 angeschlossen werden. Dieses muss nur noch montiert werden und das Verbindungskabel unter Berücksichtigung von Sicherheitsbestimmungen verlegt werden.

Durch die Sicherstellung, dass stets nur ein Elektrofahrzeug 2 geladen wird und dadurch die Hauptleitung mit bevorzugt 22 kW immer nur von einem Elektroauto 2 verwendet wird, kann auf teure Sicherheitseinrichtungen (z.B. FI & LS Schutzschalter) verzichtet werden bzw. die vorhandene Sicherheitseinrichtung der vorgeschalteten Ladestation 6 verwendet werden.

Um Transparenz und Nachvollziehbarkeit für den Nutzer zu schaffen, kann das Hauptmodul 22 und/oder eine Anschlusseinrichtung 10 oder mehrere Anschlusseinrichtungen 10, 11, 110 jeweils ein Interaktionselement (Display) 50 (vgl. Fig. 2), 62 (vgl. Fig. 3) aufweisen. Dies ist vorteilhaft, da dadurch dem Nutzer anzeigbar ist, wann welches Elektrofahrzeug 2 geladen wird und/oder geladen sein wird. Es kann somit z.B. ein first-come-first-serve Algorithmus oder eine prioritätsgesteuerte Aufladung den Nutzern nachvollziehbar verdeutlicht werden. Weiterhin kann das Hauptmodul 22 ein Identifikationseinrichtung 52 (insbesondere auf RFID basierend) aufweisen. Zusätzlich oder alternativ kann die Anschlusseinrichtung 10 eine solche Identifikationseinrichtung 64 (vgl. Fig. 3) aufweisen. Zusätzlich oder alternativ ist es jedoch ebenfalls möglich, dass z.B. das Hauptmodul 22 oder eine Anschlusseinrichtung 10, 11, 110 per kabelloser Verbindung Ablaufdaten bzgl. des Ablaufs des Ladevorgangs an ein Endgerät des Nutzers übermittelt. Das Endgerät kann hierbei z.B. ein Smartphone, eine Smartwatch, ein TabletPC oder ein Laptop sein. Bevorzugt erkennt der Nutzer dadurch, in welcher Reihe sein Fahrzeug geladen wird und zu welchem Zeitpunkt er welche geladenen Strommenge (insbesondere in kWh) erwarten kann. Es ist zusätzlich oder alternativ ebenfalls möglich, dass der Ladealgorithmus aktiv beeinflussbar ist, wodurch ein sogenanntes PriorityCharging ermöglicht wird. Ein solches Priority-Charging entspricht einer proritätsgesteuerten

Aufladung und kann z.B. durch das Entrichten einer höheren Gebühr oder eines höheren KW/h-Preises umgesetzt werden. In bestimmten Einsatzfällen können die Nutzer somit z.B. auf ein gewisses Kontingent an Schnelllademinuten zurückgreifen, um den Algorithmus zu ihren Gunsten zu beeinflussen.

Das Verbindungskabel 34, 36 zwischen zwei Modulen, insbesondere zwischen einem Hauptmodul 22 und einer Anschlusseinrichtung 10 undloder zwischen zwei Anschlusseinrichtungen 10, 11, weist bevorzugt 2 Komponenten auf, die besonders bevorzugt im selben Strang verlaufen. Dies gilt bevorzugt ebenfalls für das Verbindungskabel 32 zwischen der Ladestation 6 und dem Hauptmodul 22. Das Verbindungskabel 32, 34, 36 weist bevorzugt mindestens oder genau zwei Stränge auf, wobei in einem Strang bevorzugt mehrere Adern, insbesondere 5 Adern, verlaufen und im anderen Stang bevorzugt ebenfalls mehrere, insbesondere 6 oder 10 Adern, verlaufen. Der erste Strang überträgt hierbei bevorzugt den Ladestrom und besteht, wie z.B. der Typ 2 Stecker, aus 5 Adern. Zur Kommunikation und für die Hardware Redundancy stehen bevorzugt weitere 6 oder 10

Adern zur Verfügung, diese sind bevorzugt Teil des zweiten Strangs bzw. eines zweiten Strangs.

Der zweite Strang bzw. die zweite Leitung teilt sich weiter in die Adern zur Datenkommunikation zwischen dem Hauptmodul und den Anschlusseinrichtungen und in die Daten-/Signal-/Sicherheitsadern für die Hardwareredundanz auf.

Zur Übertragung der Leistung stehen somit bevorzugt 5 Adern mit besonders bevorzugt jeweils 2 mm² bis 10mm² Querschnittsfläche, insbesondere 6 mm² Querschnittsfläche, zur Verfügung (L1, L2, L3, N, PE). Zur Kommunikation stehen somit bevorzugt 6 oder 10 Adern mit einem bevorzugt geringeren Querschnitt, insbesondere mit einer Querschnittsfläche zwischen 0,1mm² und 5mm², insbesondere einer Querschnittsfläche von 1 mm², zur Verfügung. Die Aufteilung der Adern kann hierbei z.B. die folgende sein: Mehrere Adern, bevorzugt 2 Adern, für RS485
Kommunikation, mehrere Adern, bevorzugt 2 Adern, für die Übertragung von 12V zur Versorgung der einzelnen
Controller (z.B. Master Charge Controller 42 (vgl. Fig. 2) oder Slave Charge Controller 40 (vgl. Fig. 2), 60 (vgl. Fig. 3)) und jeweiligen Units und mehrere Adern, bevorzugt 2 Adern für die Hardware Redundancy, die verhindert das mehr als ein Elektrofahrzeug 2 gleichzeitig laden kann.

Fig. 2 zeigt ein selbständiges Hauptmodul 22. Es ist jedoch ebenfalls möglich, dass die Komponenten des Hauptmoduls 22 als Strombereitstellungseinrichtung integraler Bestandteil einer Ladestation 6 (vgl. Fig. 6) sind und dadurch eine Ladeeinrichtung 4 ausbilden (vgl. Fig. 1).

Die Aufgabe des Master Charge Controllers 42 ist es mit der angeschlossenen Ladestation 6 (vgl. Fig. 6) zu kommunizieren und ihr vorzugeben, dass es sich bei dem Hauptmodul 22 um ein Elektroauto 2 handelt. Dies wird vorgenommen, damit die Ladestation Strom an das Hauptmodul 22 abgibt. Das Simulieren der Elektrofahrzeugeigenschaften geschieht bevorzugt durch das Schalten zweier Widerstande. Bevorzugt ist 2,7k Ohm für Elektrofahrzeuge verbunden und 2,7k Ohm + 1,3k Ohm für Laden über einen vordefinierten Pin des Steckers 18, insbesondere einen CP Pin des Typ 2 Steckers. Das entspricht der zertifizierten Kommunikation von Elektrofahrzeugen 2 und Ladestationen 6 nach: IEC 61851 - 1. Somit kann das Hauptmodul ebenfalls zum Laden eines elektrischen Fahrzeugs verwendet werden. Das Hauptmodul kann somit bevorzugt eine Anschlusseinrichtung integriert haben bzw. über eine Anschlusseinrichtung verfügen, wobei diese Anschlusseinrichtung hierbei bevorzugt im selben Gehäuse verbaut ist, wie das Hauptmodul bzw. sich mit dem Hauptmodul ein Gehäuse teilt.

Bevorzugt wird, insbesondere gleichzeitig, bei der Kommunikation mit der Ladestation 6 auch das PWM, was über den verfügbaren Strom entscheidet, ausgelesen, verwaltet und an die Slave Charge Controller 40, 60 weitergegeben. Wenn ein angeschlossenes Auto 2 nicht geladen wird, wird es bevorzugt in einem Standby bzw. Wartemodus gehalten.

Der Typ 2 Stecker verfügt auch über einen PP Pin der mit einem Wiederstand kodiert ist und darüber informiert für wieviel Strom das Kabel ausgelegt ist.

Des Weiteren liest der Master Charge Controller 42 den Stromzähler aus und ordnet den verbrauchten Strom bevorzugt dem angeschlossenen Auto 2 zu, um eine genaue Abrechnung möglich zu machen.

Der Master Charge Controller 42 sammelt somit bevorzugt auch Authentifizierungsdaten, insbesondere mittels der Identifikationseinrichtung, und Daten zur Analyse und Abrechnung, insbesondere Fahrzeugdaten, Ladedauer, Anschlusszeit (d.h. den Zeitraum, in dem das Elektrofahrzeug mit der Vorrichtung verbunden ist) und/oder Lademenge, bevorzugt intern (interner flash Speicher) und/oder extern was bevorzugt über das kabellose Anbinden an ein Netzwerk, insbesondere ein internetbasiertes Netzwerk, bevorzugt ein WIFI Netzwerk oder per 3G/4G/5G an das Internet, geschieht. Was dann auch den online Zugriff auf die Ladelösung ermöglicht. So kann im Problemfall eine Fernwartung durchgeführt werden oder die Zugriffsrechte direkt vom Kunden verwaltet werden.

Der Algorithmus, der den Ladevorgang steuert und je nach Anforderungsprofil unterschiedlich gestaltet sein kann, bzw. die Bestimmung der Reihenfolge, in der die angeschlossenen Elektrofahrzeuge 2 geladen werden, wird auch komplett im Master Charge Controller 42 exekutiert. An den Slave Charge Controller 40 wird dann nur noch der Befehl zum Laden oder nicht Laden gesendet. Die Kommunikation zwischen dem Master Charge Controller 42 und einer beliebigen Anzahl von Slave Charge Controllern 40, 60 (vgl. Fig. 3) erfolgt bevorzugt kabellos oder mittels Kabelverbindung, insbesondere über den RS485 Übertragungsstandard, was eine theoretische Länge von 1200m erlaubt. Das Hauptmodul 22 weist bevorzugt ein Gehäuse 38 zur Wandmontage bzw. zur Montage auf einem Standfuß auf. Ferner ist der Stecker 18 bevorzugt als Typ 2 Steckdose (fahrzeugseitig) ausgebildet. Alternativ kann der Stecker 18 auch als angeschlagenes Typ 2 Kabel bereitgestellt sein. Das Bezugszeichen 26 kennzeichnet bevorzugt eine Anschlusseinrichtungskopplungsstelle zum Anschließen einer Anschlusseinrichtung 10. Diese Anschlusseinrichtungskopplungsstelle 26 bildet bevorzugt eine mechanische Schnittstelle zum Verbinden mit einem Erweiterungsmodul bzw. einer Anschlusseinrichtung 10, insbesondere in Form eines Verbindungskabels (Kommunikationssignal sowie Stromkabel, insbesondere 22 kW), aus. Ferner weist das Hauptmodul 22 bevorzugt einen PWM-Controller zur Kommunikation mit der Ladestation 6 auf. Der PWM-Controller kann dabei z.B. Bestandteil einer Steuerungseinrichtung, insbesondere des Master Charge Controllers 42, sein. Ferner weist das Hauptmodul 22 bevorzugt einen Mikrocontroller für die Kommunikation mit angeschlossenem Elektrofahrzeug, sowie zur Master-Slave-Steuerung der angeschlossenen Anschlusseinrichtungen auf. Bevorzugt ist auf dem Mikrocontroller eine Ladereihenfolgeregelung hinterlegt bzw. installiert. Die Ladereihenfolgeregelung kann hierbei z.B. durch einen FCFS-Algorithmus definiert werden. Der Schalter 20 ist bevorzugt als Lastschütz, insbesondere als 22KW Lastschütz, ausgebildet. Weiterhin weist das Hauptmodule 22 bevorzugt ebenfalls einen Energiezähler bzw. Stromzähler 46 auf. Der Stromzähler 46 misst dabei die während eines Ladevorgangs an das Elektrofahrzeug 2 abgegebene Strommenge. Das Bezugszeichen 24 kennzeichnet eine Ladestationskopplungsstelle. Diese Ladestationskopplungsstelle 24 ist bevorzugt als Typ 2 Steckdose (infrastrukturseitig) ausgebildet und dient zum Erzeugen einer Stromverbindung (und bevorzugt Datenverbindung) mit der Ladestation 6.

Ferner weist das Hauptmodul 22 bevorzugt eine Kommunikationsschnittstelle 48 zur Kommunikation mit einem Server oder einem Cloudservice oder einer externen Steuerungseinrichtung auf. Diese Kommunikationsschnittstelle 48 kann hierbei als OCPP Schnittstelle (im Gehäuse 38 oder als Kommunikationsbox außerhalb des Gehäuses 38) vorgesehen sein. Ferner bildet das Hauptmodul 22 durch den Schalter 20 eine Schaltung inkl. Hardware Redundancy aus.

Die Aufgabe des Slave Charge Controllers 40 ist es die über die Kommunikation erhaltenen Befehle des Master Charge Controllers 42 umzusetzen, in den meisten Fällen stellt dies die Befehle laden oder nicht laden da bzw. das Einstellen/Aufrechterhalten eines Wartemodus. Der Slave Charge Controller 40 bewirkt die lokale Verwaltung. Dies beinhaltet bevorzugt das Betreiben des Displays 62 und/oder das Lesen der RFID Tags 64 (die RFID Zugangsdaten werden bevorzugt vom Master Charge Controller 42 verwaltet), die Steuerung des Ladevorgangs (den Schalter 20, insbesondere das Schuetz, ein und aus schalten und/oder das für die Kommunikation mit dem Auto 2 wichtige PWM zu erzeugen und/oder +12 und - 12 Volt zu erzeugen und/oder das richtige PWM, was über den Ladestrom entscheidend, an das Auto 2 weiter zu geben und/oder erkennen, ob ein Auto 2 ladebereit ist und/oder das Weitergeben von Daten, welche diese Informationen transportieren, an den Master Charge Controller 42, der dann entscheidend, wann das Auto 2 geladen wird).

Der Slave Charge Controller 40 liest den PP (Proximity Pilot) und gibt die Information an den Master Charge Controller 42 weiter, der darüber entscheidend, ob mit voller Leistung oder mit begrenzter Leistung geladen werden kann. Der Slave Charge Controller 40 erkennt, wenn ein Auto 2 verbunden ist, teilt es dem Master Charge Controller mit. Bevorzugt weist der Stecker 18 ein Schloss zum Verriegeln des Steckers 18 auf. Der Stecker 18 wird bevorzugt vor dem Beginn des Ladevorgangs verriegelt und erst danach entriegelt, damit das Elektrofahrzeug 2 während des Ladevorgangs nicht von der Vorrichtung 1 entkoppelt werden kann. Jede neue Anschlusseinrichtung 11, 110 wird vom Master Charge Controller 42 des Hauptmoduls 22 erkannt und registriert, damit diese betrieben werden kann.

Weiterhin weist das Hauptmodul 22 eine Hardware Redundancy (HRD) auf, die das gleichzeitige Laden von mehreren Elektrofahrzeugen 2 über dieselbe Ladestation 6 verhindert. Die HRD arbeitet mit dem Strom der zur Verfügung steht sobald ein Auto 2 geladen wird und schaltet damit alle anderen Schalter 20, insbesondere Schütze, in den anderen Units (10, 11, 110) auf inaktiv. Hierfür werden die Adern im zweiten Strang bzw. der zweiten Leitung verwendet, wobei die Adern gemeint sind die für die Hardware Redundancy vorgesehen sind.

### Ausführungsform 1:

Dies wird bevorzugt mit einer mehradrigen Versorgungsleitung, bevorzugt einer zweiadrigen Versorgungsleitung, im Kabel 34, 36 gelöst, die sich besonders bevorzugt alle Relais teilen, die zur Schaltung der Schalter 20, insbesondere Schütze, verwendet werden.

### Ausführungsform 2:

In dieser Ausführungsform wird die mehradrige Versorgungsleitung für die Hardware Redundanz im Versorgungskabel 34, 36 zur Übertragung eines Logikwerts verwendet. Alle Relais, die zur Schaltung der Schalter 20, insbesondere Schütze, verwendet werden, sind mit der Logikschaltung verbunden. Wenn ein Relais geschaltet ist, ändert sich der Logikwert, sodass die anderen Relais nicht mehr schalten können. Dafür befindet sich bevorzugt in jeder Anschlusseinrichtung bevorzugt ein Modul mit der Logikschaltung.

Das Bezugszeichen 25 kennzeichnet hierbei die ersten Hauptmoduladern, durch die das Hauptmodul 22 mit der Ladestation 6 verbindbar ist. Das Bezugszeichen 29 kennzeichnet die zweiten Hauptmoduladem, durch die das Hauptmodul 22 mit einer Anschlusseinrichtung 10 verbindbar ist.

Fig. 3 zeigt schematisch bevorzugte Komponenten der Anschlusseinrichtung 10, 11, 110. Diese weisen bevorzugt einzelne oder mehrere, insbesondere alle, der nachfolgend genannten Bauteile auf: Gehäuse 39 zur Wandmontage bzw. zur Montage auf einem Standfuß und/oder physikalische Schnittstelle 23, 26 zum Verbinden mit einem vorgeschalteten und einem nachgeschalteten Modul (Hauptmodul 22 und/oder Anschlusseinrichtung 10, 11, 110), insbesondere mit einem Verbindungskabel 34, 36 (insbesondere zur Übertragung eines Kommunikationssignal sowie Strom, insbesondere 22 kW) und/oder einen Stecker 18, insbesondere einen Typ 2 Stecker mit Verriegelung und/oder einen Schalter 20, insbesondere einen Lastschütz, insbesondere einen 22kW Lastschütz, und/oder einen Mikrocontroller für die Kommunikation mit dem angeschlossenen Elektrofahrzeug 2 und/oder eine Schaltung inkl. Hardware Redundancy, wobei die Schaltung bevorzugt den Schalter 20 umfasst.

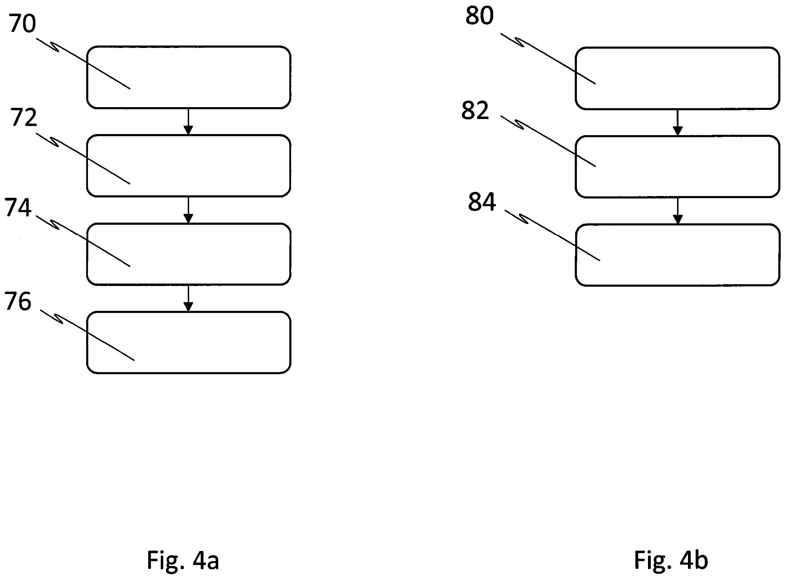

Fig. 4 zeigt schematisch zwei Abläufe, gemäß denen die Ladereihenfolge der angeschlossenen Elektrofahrzeuge 2 bestimmt werden kann. Auf jedem Modul 10, 11, 22, 110 ist bevorzugt ein Ladealgorithmus vorinstalliert. Dieser ermöglicht, dass die Module 10, 11, 22, 110 im dezentralen Verbund untereinander agieren können. Dadurch ist keine Datenanbindung nötig.

Dadurch wird das Ziel verfolgt, dass sich alle Hauptboxen bzw. Hauptmodule 22 und alle Nebenboxen bzw. Anschlusseinrichtungen 10, 11, 110 selbst organisieren, indem jedes Modul 10, 11, 22, 110 die Zustände und Variablen der anderen Module 10, 11, 22, 110 in der Reihe kennt. Dadurch kann jede Box 10, 11, 22, 110 ausrechnen, ob sie gerade laden darf oder nicht.

Dazu ist der Algorithmus bevorzugt als eine smarte Version eines First-Come-First-ServeAlgorithmus (Smart-FCFS) vorinstalliert. Es sind hierbei Modifikationen des Algorithmus möglich. So können die Fahrzeuge strikt nach dem FCFS-Prinzip geladen werden oder jedes neu angeschlossene Fahrzeug erhält eine vordefinierte Anzahl an Prioritätsintervalle, wobei die Länge der Prioritätsintervalle gleich oder verschieden sein kann. In einem Beispiel können jedem neu angeschlossenen Fahrzeug z.B. 3 Prioritätsintervalle mit einer Dauer von 10 Minuten zugeordnet werden. Wenn ein Fahrzeug ankommt, hat das erste

Prioritätsintervall die Priorität 1, das zweite Prioritätsintervall die Priorität 2 und das dritte Prioritätsintervall hat die Priorität 3. Die Anzahl der Prioritätsintervalle und die jeweilige Dauer können dabei einstellbar sein. Bevorzugt werden die Fahrzeuge dann nach den jeweils vorhandenen bzw. zugeordneten Prioritäten geladen. Sind z.B. 2 Fahrzeuge mit einer Priorität 3 angeschlossen und ein neues Fahrzeug wird angeschlossen, so wird das neue Fahrzeug bevorzugt aufgrund seiner Prioritäten 1 und 2 zunächst die ersten beiden Prioritätsintervalle geladen. Dann werden nacheinander die anderen beiden Fahrzeuge geladen, wobei das Fahrzeug, das zuerst angeschlossen wurde zuerst geladen wird, dann wird das andere dieser beiden Fahrzeuge geladen und anschließend wird das zuletzt angeschlossene Fahrzeug mit dem dritten Prioritätsintervall geladen. Hieran schließt sich dann bevorzugt ein weiterer Ladevorgang des zuerst angeschlossenen Fahrzeugs an, bis dieses voll bzw. bis zu einer definierten Füllung geladen ist. Danach wird das zweite Fahrzeug vollständig bzw. bis zu einer vordefinierten Füllung geladen und dann erst wird das zuletzt angeschlossene Fahrzeug voll bzw. bis zu einer vordefinierten Füllung geladen. Das System wickelt die Prioritätsintervalle somit bevorzugt absteigend nach ihrer Priorität ab. Also erst alle Autos, die noch ein Prioritätsintervall mit Priorität 1 haben, danach alle mit Priorität 2, dann alle mit Priorität 3, bevor das FCFS greift. Dadurch erhält jedes Auto vorab eine Aufladung, die der gewöhnlichen Tagesnutzung eines Autos entspricht. So entstehen den Nutzern keine merklichen Nachteile durch das Teilen der Ladestation. Alternativ kann das Prioritätsintervall auch als Prioritätsenergiemenge definiert werden. Z.B. statt X Minuten, insbesondere 15 Minuten, pro Prioritätsintervall können z.B. X kWh, insbesondere 5 kWh, als Prioritätsenergiemenge definiert werden.

Nachfolgend werden bevorzugte Parameter angeführt. Bevorzugt werden einzelne oder mehrere dieser Parameter vom Algorithmus verwendet. Diese Parameter werden entweder vom Modul 10, 11, 22, 110 im Betrieb gespeichert oder sind systeminhärent. Die Parameter können dabei umfassen: t: Zeit (Datum & Uhrzeit); ID: Individuelle Identifikationsnummer jedes Moduls; Version: Version der Software; S: Aktueller Status (insbesondere 1. Modul auf Stand-by, 2. EV eingesteckt und auf Stand-by: auf Ladeerlaubnis warten, 3. Eingesteckt und vollgeladen, 4. Schütz geschalten (EV nicht ladend), 5. EV lädt & Schütz geschalten, 6. Fehler), Pos: Physische Position in der Reihe (Distanz von der Ladestation in der Modulreihe), P_max: Maximum power available for charging.

Zusätzliche oder alternative Parameter werden beim Einstecken des Elektrofahrzeugs 2 in die Vorrichtung 1 erfasst: Maximaler Ladestrom des Ladekabels und/oder RFID-Identifikation (ja/nein).

Als Standbyfunktionalitäten erfolgt bevorzugt eine Datenübertragung zum Hauptmodul 22 und/oder senden des Status "verfügbar" or "fehler" über das Display
Der Ladevorgang wird bevorzugt, wie in der Norm 61851-1 beschrieben begonnen.

Fig. 4a verdeutlicht hierbei einen bevorzugten Ladeablauf. Dieser Ladeablauf beginnt gemäß Bezugszeichen 70 mit einer optionalen Identifikation des Elektrofahrzeugs 2 und/oder des Nutzers, insbesondere mittels RFID-Komponenten.

Bezugszeichen 72 repräsentiert hierbei, dass jedes Elektrofahrzeug 2 z.B. ein Kontingent an Ladezeit oder Energie, entsprechend dem nach dem Einstecken das Elektrofahrzeug 2 geladen wird, aufweist. In der Zeit hat das Elektrofahrzeug somit Priorität gegenüber allen anderen an der Vorrichtung 1 angeschlossenen Elektrofahrzeugen 2. Sollten zwei Elektrofahrzeuge 2 dieselbe Priorität haben, wird erst das Elektrofahrzeug abgearbeitet, das zuerst angekommen ist.

Bezugszeichen 74 kennzeichnet den Fall, dass kein Elektrofahrzeug 2 in der Reihe mehr über ein Prioritätskontingent verfügt. In diesem Fall wird das Auto nach FCFS vollgeladen, d.h. es wird das Elektrofahrzeug 2 geladen, das sich zuerst eingesteckt/registriert hat.

Bezugszeichen 76 kennzeichnet den Fall, dass sich im Ablaufplan eine Gleichheit ergeben hat. Hierbei sticht das Modul 10, 11, 22, 110, das vorne in der Reihe ist, d.h. im Strompfad näher zur Ladestation 6 angeordnet ist. Es entscheidet also in diesem Fall die physikalische Position in der Reihe. Also das Modul das schaltungstechnisch näher am Hauptmodul 22 ist bzw. das direkt am Hauptmodul 22 selbst angeschlossen ist oder das Modul das schaltungstechnisch näher an Ladestation 6 ist bzw. das direkt an Ladestation 6 selbst angeschlossen ist.

Fig. 4b zeigt ein Beispiel für einen State-Flow-Chart des einfachen FCFS Algorithmus.

Bezugszeichen 80 kennzeichnet eine Bestimmung der Ladeabfolge über Zeit- und/oder Energiekriterium. Kann hierdurch kein Elektrofahrzeug eindeutig bestimmt werden so wird gemäß dem Bezugszeichen 82 ein Zusatzkriterium eingeführt, d.h. wenn "80" zu keinem eindeutigen Ergebnis führt (z.B. geringste Zeit und/oder Datum wird bevorzugt - das Auto das zuerst angeschlossen wurde wird geladen). Kann hierdurch kein Elektrofahrzeug eindeutig bestimmt werden, so wird gemäß dem Bezugszeichen 84 ein Zusatzkriterium, eingeführt. Wenn "82" somit zu keinem eindeutigen Ergebnis führt wird das Elektrofahrzeug 2 geladen, das schaltungstechnisch näher am Hauptmodul 22 ist bzw. das direkt am Hauptmodul 22 selbst angeschlossen ist (z.B. Auswahl in Abhängigkeit von Position des Fahrzeugs / Anschlusssteckers / Anschlusseinrichtung)

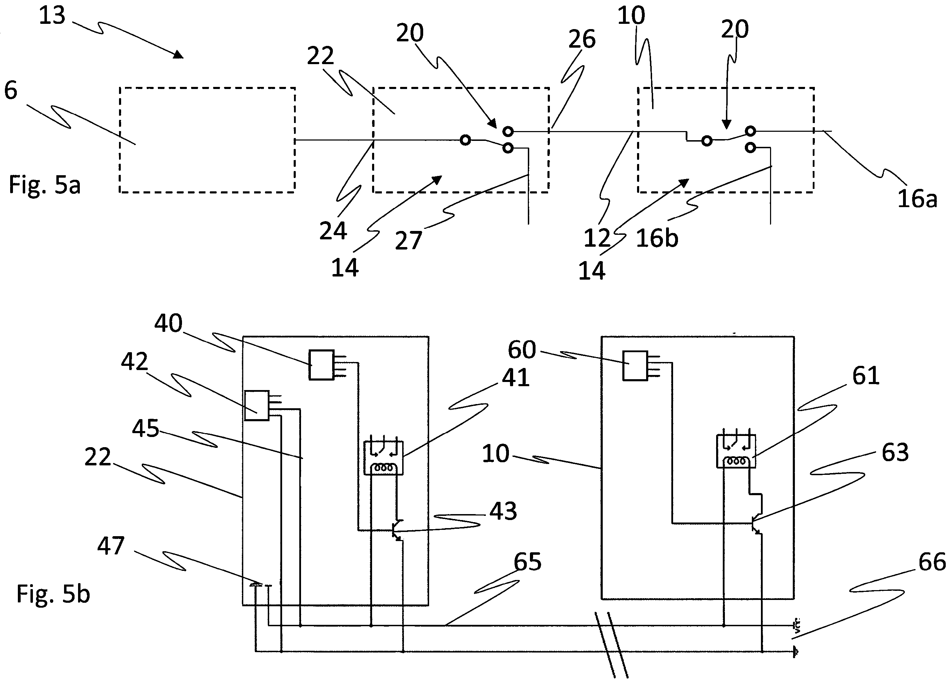

Fig. 5a zeigt eine Hauptschaltungsanordnung 13, die sich aus der Gesamtheit mehrerer Schaltungsanordnungen 14 ergibt. An die Ladestation 6 ist ein Hauptmodul 22 angeschlossen. Das Hauptmodul 22 weist dabei eine Ladestationskopplungsstelle 24 auf, über die Strom von der Ladestation 6 dem Hauptmodul 22 zuführbar ist. Der Strom wird über einen Schalter 20, insbesondere ein Schütz, einer Anschlusseinrichtungskopplungsstelle 26 oder einer Elektrofahrzeugkopplungsstelle 27 zugeführt. Das Hauptmodul 22 ist bevorzugt über ein Kabel mit einer Anschlusseinrichtung 10 verbunden bzw. verbindbar. Die Anschlusseinrichtung 10 nimmt über eine erste Input-/Outputeinheit 12 Strom und/oder Daten und/oder Signale vom Hauptmodul 22 kommend auf. Die Anschlusseinrichtung 10 weist ebenfalls einen Schalter 20, insbesondere ein Schütz, auf. Durch den Schalter 20 ist die erste Input-/Outputeinheit 12 mit einem Input-/Output 16a zu einer weiteren Anschlusseinrichtung 11 oder zu einem Input-/Output 16b zu einem Elektrofahrzeug 2 schaltbar.

Wenn ein Auto vorne in der Reihe geladen wird (hier Hauptmodul) wird die Stromversorgung zum Fahrzeug für die hinteren Module (hier Erweiterungsmodul / Anschlusseinrichtungen 10, 11) unterbrochen. So wird sichergestellt, dass immer maximal ein Auto 2 geladen wird. Diese Funktion wird erfindungsgemäß im modularen Verbund stets sichergestellt.

### Hardware Redundanz Ausführung 1:

Fig. 5b zeigt eine weitere schematische Schaltungsanordnung, wie sie sich beim Verbinden eines Hauptmoduls 22 und einer Anschlusseinrichtung 10 bevorzugt ergibt. Um zu gewährleisten, dass zu jeder Zeit immer nur ein Elektrofahrzeug geladen werden kann, wird eine sogenannte Hardware Redundancy (HWR) implementiert. Diese besteht aus einer Versorgungsleitung 65 bestehend aus mehreren Adern, bevorzugt 2 Adern, die parallel zur Stromleitung des Ladestroms von dem Hauptmodul 22 über/zu alle Anschlusseinrichtungen 10,11,110 im
Verbindungskabel 34, 36 im Strang für die Hardware Redundanz verläuft, einem Relais 41, 61 in jedem Modul 10, 11, 22, 110, einem Transistor 43, 63 in jedem Modul 10, 11, 22, 110, einer Spannungsquelle 47 mit bestimmtem Strom und bestimmter Spannung im Hauptmodul 22.

An der Versorgungsleitung 65 liegt eine Spannung und ein Strom an, der sich bevorzugt minimal, insbesondere 0,01 %-10%, unter den Mindestanforderungen für das Schalten von genau einem Relais 41, 61 befindet. Wird nun ein Elektrofahrzeug 2 zum Laden freigegeben, schaltet der jeweilige Charge Controller 40, 60 in dem jeweiligen Modul 10, 11, 22, 110 einen Transistor 43, der wiederrum das Relais 41, 64 aktiviert, was den Aktivierungsstrom für den Schalter, insbesondere das Schuetz 20, das letztendlich die Ladeleistung schaltet, bereitstellt. Die Schalter 20 der einzelnen Module 10, 11, 22, 110 sind somit bevorzugt direkt mit dem jeweiligen Relais 41, 61 des jeweiligen Moduls 10, 11, 22, 110 verbunden (nicht gezeigt). Das Relais 41, 61 wird aktiviert, wodurch wiederrum der Schalter 20, insbesondere das Schuetz, aktiviert wird. Sollte nun aus irgendeinem Anlass, sei es ein Fehler oder ein mutwilliger Test, zur selben Zeit ein zweites Elektrofahrzeug 2 zum Laden freigegeben werden, so schaltet in dieser Konfiguration der Charge Controller 40, 60 des jeweiligen Moduls 10, 11, 22, 110 den Transistor 43, 63 des jeweiligen Moduls 10, 11, 22, 110, der wiederrum das Relais 41, 61 des jeweiligen Moduls 10, 11, 22, 110 schaltet, das wiederrum dem Schalter 20, insbesondere das Schuetz, des jeweiligen Moduls 10, 11, 22, 110 schaltet.

Da jedoch die Versorgungsleitung für alle Relais 43, 63 maximal ein Relais 43, 63 mit Strom versorgen kann bzw. mit Strom versorgt, bricht die Versorgung zusammen und alle Relais 43, 63 und damit auch alle ladenden Elektrofahrzeuge 2 werden abgeschaltet bzw. der Ladevorgang für alle ladenden Elektrofahrzeuge 2 wird bevorzugt unmittelbar beendet.

Diese wird vom Master Charge Controller 42, insbesondere über die Detektionsverbindung 45, im Hauptmodul 22 erkannt, der dann bevorzugt eine Fehlermeldung vermerkt und/oder den Ladevorgang neu startet. Diese hat den Vorteil, dass sichergestellt wird, dass zu jeder Zeit maximal ein Elektrofahrzeug 2 geladen wird.

### Hardware Redundanz Ausführung 2:

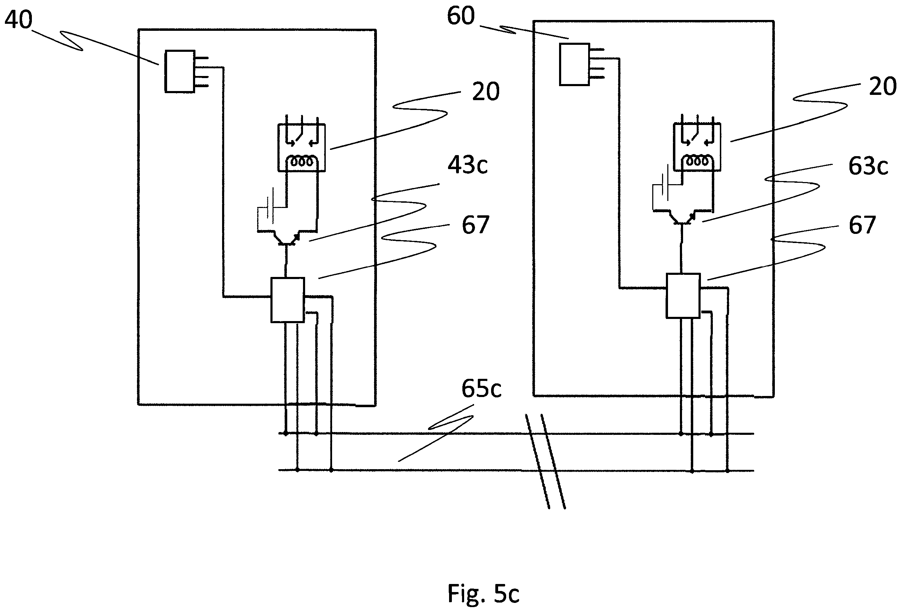

Fig. 5c zeigt eine weitere schematische Schaltungsanordnung, wie sie sich beim Verbinden eines Hauptmoduls 22 und einer Anschlusseinrichtung 10 bevorzugt ergibt. Um zu gewährleisten, dass zu jeder Zeit immer nur ein Elektrofahrzeug geladen werden kann, wird eine sogenannte Hardware Redundancy (HWR) auf Basis einer Logikschaltung 67 implementiert.

Das Logiksignal zwischen den Anschlusseinrichtungen läuft auf der Signalleitung 65 b bestehend aus mehreren Adern, bevorzugt 2 oder 3 Adern oder mehr als 2 oder mehr als 3 Adern, die parallel zur Stromleitung des Ladestroms von dem Hauptmodul 22 über/zu alle Anschlusseinrichtungen 10, 11, 110 im Verbindungskabel 34, 36 im Strang für die Hardware Redundanz verläuft. In jedem Modul 10, 11, 22, 110, gibt es dafür bevorzugt einen oder mindeste einen oder genau einen Transistor 43c, 63c, und bevorzugt eine oder mindestens eine oder genau eine Logikschaltung 67 aus Logikbausteinen.

In dieser Ausführungsform wird die mehradrige Versorgungsleitung für die Hardware Redundanz im Kabel 34, 36 zur Übertragung eines Logikwerts verwendet. In dieser Ausführungsform schalten die Transistoren 43c direkt die Schalter 20. Alle Transistoren, die zur Schaltung der Schalter 20c, insbesondere Schütze, verwendet werden, sind mit der Logikschaltung 67 verbunden. Wenn ein Transistor geschaltet ist, ändert sich der Logikwert auf der gemeinsamen Signalleitung, sodass die anderen Transistoren nicht mehr schalten können.

An den Signalleitungen 65c liegt eine Spannung an, die einen Logikwert von 0 oder 1 darstellt.

Wird kein Elektroauto geladen, hat die Signalleitung einen festgelegten Logikwert.

Wird nun ein Elektrofahrzeug 2 zum Laden freigegeben, schaltet der jeweilige Charge Controller 40, 60 in dem jeweiligen Modul 10, 11, 22, 110 einen
Transistor. Da die Signalleitung den Wert aufweist, dass bisher kein Auto lädt, kann das Aktivierungssignal vom Ladecontroller durch die Logikschaltung weiter zum Transistor fließen. Der Transistor aktiviert wiederrum den
Schalter 20, insbesondere das Schuetz 20, das letztendlich die Ladeleistung schaltet. Die Schalter 20 der einzelnen Module 10, 11, 22, 110 sind somit bevorzugt direkt mit dem jeweiligen Transistor 63c des jeweiligen Moduls 10, 11, 22, 110 verbunden (nicht gezeigt).

Der Transistor wird folglich aktiviert, wodurch wiederrum der Schalter 20, insbesondere das Schuetz, aktiviert wird. Der Logikwert auf der Signalleitung wird dann durch das aktivieren des einen Transistors über die Logikschaltung auf den Wert geändert, der darstellt, dass bereits ein Auto lädt.

Sollte nun aus irgendeinem Anlass, sei es ein Fehler oder ein mutwilliger Test, zur selben Zeit ein zweites Elektrofahrzeug 2 zum Laden freigegeben werden, so sendet in dieser Konfiguration der Charge Controller 40, 60 des jeweiligen Moduls 10, 11, 22, 110 das Signal in Richtung des Transistors 43c, 63c des jeweiligen Moduls 10, 11, 22, 110, über die Logikschaltung 67. Da der Logikwert auf der Signalleitung dem Wert entspricht, dass bereits ein Elektroauto lädt, wird das Aktivierungssignal nicht durch die Logikschaltung zum Transistor durchgeleitet. Dadurch wird der Transistor des jeweiligen Moduls 10, 11, 22, 110 nicht geschalten, wodurch wiederrum der Schalter 20, insbesondere das Schuetz, des jeweiligen Moduls 10, 11, 22, 110 nicht schaltet. Damit wird auch der Ladestrom zum zweiten Elektroauto nicht geschalten. Es kann also weiterhin nur ein Elektroauto laden.

Da also die Logikschaltung 67 für alle Transistoren, maximal einen geschalteten Transistor zulässt, kann niemals ein zweiter Transistor geschalten werden. Damit wird auch der zweite Schalter nicht geschalten und kein weiteres Elektrofahrzeug 2 geladen. Anschließend wird der begonnene bzw. angefragte Ladevorgang für alle ladenden Elektrofahrzeuge 2 bevorzugt unmittelbar beendet und mit dem Laden eines Fahrzeugs neu gestartet.

Dieser Fehler im Ladealgorithmus und eingreifen der Hardware Redundancy, dass ein zweites Fahrzeug gleichzeitig laden soll aber durch die Hardware Redundanz nicht laden kann, wird vom Master Charge Controller 42, insbesondere über die Detektionsverbindung 45, im Hauptmodul 22 erkannt, der dann bevorzugt eine Fehlermeldung vermerkt und/oder den Ladevorgang neu startet. Diese hat den Vorteil, dass sichergestellt wird, dass zu jeder Zeit maximal ein Elektrofahrzeug 2 geladen wird.

Fig. 6 zeigt eine schematische Darstellung der Kommunikation zwischen den Modulen und des Systems nach außen.

Das System bzw. die Vorrichtung 1 stellt sich nach außen wie viele einzelne Ladestationen 6 dar. Es kommuniziert zwar nur das Hauptmodul 22 Informationen über ein vordefiniertes Protokoll, wie z.B. OCPP, nach außen, aber alle Ladepunkte 10, 11, 110 können einzeln überwacht werden. Das Hauptmodul 22 übernimmt also die Kommunikation für die Erweiterungsmodule / Anschlusseinrichtungen 10, 11, 110. Für den externen Zugreifer 90 sieht es so aus, als könnte er auf jedes Modul einzeln über ein vordefiniertes Protokoll 92, insbesondere OCPP, zugreifen.

Das Hauptmodul 22 wird an eine vorhandene oder neu installierte Ladestation angeschlossen, dann werden mehrere Anschlusseinrichtungen 10, 11, 110 seriell an das Hauptmodul 22 angeschlossen.

Das Bezugszeichen 94 kennzeichnet, dass die einzelnen Module 10, 11, 22, 110 untereinander Daten und/oder Signale austauschen bzw. austauschen können.

In einem Beispiel mit 11kW wird z.B. mit 1 Hauptmodul 22 und 3 Anschlusseinrichtungen 10, 11, 110 geplant. Beim ersten Start aktiviert das Hauptmodul 22 die Ladestation 6, um sich mit Strom zu versorgen, von dem Zeitpunkt an wird die Ladestation 6 immer aktiv sein (bis auf Wartungsarbeiten, Anschluss von Anschlusseinrichtungen oder Defekt). Wenn nun ein Auto 2 an dem Hauptmodul 22 oder einer Anschlusseinrichtung 10, 11, 110 angeschlossen wird, dann wird zunächst erkannt, dass es angeschlossen ist, für wie viel Leistung das Kabel (mit dem das Auto 2 angeschlossen ist) ausgelegt ist und ob das Auto 2 eine Ladung anfordert. Dies wird dann an den Master Charge Controller 42 weitergegeben, der darüber entscheidend, ob geladen wird, wie viel Strom und für wie lange. Die anderen Module (Anschlusseinrichtungen 10, 11, 110) erhalten diese Informationen ebenfalls, insbesondere in Form vom Daten, welche diese Informationen repräsentieren. Die Entscheidung, welches angeschlossene Elektrofahrzeug 2 geladen wird, hängt vom verwendeten Ladealgorithmus bzw. von den hierzu hinterlegten Abläufen bzw. Regeln ab. Wenn mehr als ein Auto 2 verbunden ist entscheidet der Algorithmus darüber welches Elektrofahrzeug 2 für wie lange geladen wird, bevor das nächste an der Reihe ist.

Der modulare Aufbau ermöglicht eine einfache Nachrüstung von weiteren Modulen ohne die Notwendigkeit von geschultem Fachpersonal. Das System muss nur abgeschaltet werden und anschließend kann über das Stecksystem der Anschlusseinrichtungen eine weitere Anschlusseinrichtung angeschlossen werden.

Das Ladesystem bzw. die erfindungsgemäße Vorrichtung ist bevorzugt im Hauptmodul mit einem Energiezähler ausgestattet. Durch zeitlichen Abgleich der Ladevorgänge und einer Identifikationseinrichtung, insbesondere einem RFID-Leser 52, 64 oder Chipkartenleser, etc. kann der geladene Strom kWh-genau dem Fahrzeug bzw. dem Nutzer zugeordnet werden.

Zusätzlich oder alternativ ist es möglich in jedem Modul einen MID-konformen Energiezähler zu verbauen.

Das Ladesystem besitzt bevorzugt mindestens oder genau eine OCPP Schnittstelle. Dadurch können Backend-Systeme 90 auf die Ladedaten zugreifen, Ladedaten auswerten und ggf. mit den Nutzern verrechnen. Das Ladesystem an sich beherrscht durch die Hardware Redundancy bevorzugt statisches Lastmanagement, d.h. die vorgehaltene Last von z.B. 22 kW wird nicht überschritten. Dieser Wert von x kW, insbesondere von 22kW, kann bevorzugt durch ein externes, dynamisches Lastmanagement-System via OCPP reduziert werden. Durch diese Schnittstelle ist die Ladelösung somit ohne Probleme in dynamische Lastmanagement Systeme integrierbar.

Das Ladesystem ist an jedem Ladepunkt mit einer Authentifizierungsmöglichkeit versehen, bevorzugt RFID basiert, später ggf. NFC, Bluetooth und/oder weitere Systeme. Dadurch kann das Laden einem fest definierten Nutzerkreis ermöglicht werden oder durch Integration in ein Backend-System 90 auch das barrierefreie Roaming mit anderen Ladekarten ermöglicht werden.

Das Ladesystem ist erfindungsgemäß bevorzugt als Adapterlösung für bestehende Ladestationen konzipiert.

Alternativ kann die Erfindung jedoch ebenfalls in Ladestationen integriert sein. Diese beinhaltet neben den Lade- und Sicherheitseinrichtungen (insbesondere FI & LS Schutzschalter) ein integriertes Hauptmodul, wodurch keine andere Ladestationen mehr benötigt wird.

Somit bezieht sich die vorliegende Erfindung auf eine Vorrichtung 1 oder ein System zum Aufladen von Batterien von Elektrofahrzeugen 2. Die Vorrichtung 1 oder das System umfasst dabei bevorzugt mindestens eine Ladeeinrichtung 4 zum zeitversetzten Aufladen einer Vielzahl zeitgleich an der Vorrichtung 1 bzw. an das System angeschlossener Elektrofahrzeuge 2, wobei die Ladeeinrichtung 4 eine Ladestation 6 zum Bereitstellen eines Ladestroms aufweist und wobei die Ladeeinrichtung 4 eine Strombereitstellungseinrichtung aufweist, und mindestens eine Anschlusseinrichtung 10 zum Anschließen der Vielzahl an Elektrofahrzeugen 2, wobei die Anschlusseinrichtung 10 eine erste Input-/Outputeinheit 12 und eine damit über eine Schaltungsanordnung 14 verbundene zweite Input-/Outputeinheit 16 aufweist, wobei die zweite Input-/Outputeinheit 16 mindestens zwei Anschlussstecker 18 zum Anschließen von jeweils einem Elektrofahrzeug 2 und/oder einer weiteren Anschlusseinrichtung 11 aufweist, wobei jeder Anschlussstecker 18 zum Erzeugen einer Datenverbindung und/oder Stromverbindung zwischen dem daran angeschlossenen Elektrofahrzeug 2 und der Strombereitstellungseinrichtung dient, wobei die Strombereitstellungseinrichtung bewirkt, dass die Ladestation 6 den Ladestrom bevorzugt dauerhaft an die Anschlusseinrichtung 10 bereitstellt, und in Abhängigkeit von mindestens einem vordefinierten Steuerungsparameter den Ladestrom durch eine Ansteuerung der Schaltungsanordnung 14 genau einem Anschlussstecker 18 zuführt.

Dies ist vorteilhaft, da erstmalig ein modulares bzw. Adaptersystem bereitgestellt wird, mit dem die Anzahl an Ladepunkten einer Ladestation veränderlich, insbesondere erhöhbar, ist. Durch die Bündelung und systemübergreifenden Verwendung teurer Komponenten im Hauptmodul oder in der Ladestation, die auch die Erweiterungsmodule in der Reihe verwenden, können gegenüber den bekannten Ladestationen erhebliche Kostensenkungen pro Ladepunkt realisiert werden.

Die vorliegende Erfindung ermöglicht die bedarfsgerechte Erweiterung der Ladeinfrastruktur analog zur Elektrifizierung von Flotten durch einfache modulare Erweiterung um Anschlusseinrichtung/en.

Die erfindungsgemäße Vorrichtung verteilt die Hardwarekosten einer Ladestation über mehrere Ladepunkte bzw. Stellplätze. Dadurch wird eine drastische Reduzierung der Kosten pro Ladepunkt erzielt. Die Elektrifizierung von Stellplätzen wird somit deutlich kostengünstiger.

Gleichzeitig reduziert der modulare Aufbau den Installationsaufwand, da die Module via plugand-play installiert werden können.

Der von der Steuerung umgesetzte bzw. ausgeführte Ladealgorithmus bewirkt, dass dem Nutzer zu keiner Zeit Nachteile in der Verwendung entstehen.

Da eine Ladestation aufgrund der daran angeschlossenen Vielzahl an Anschlusseinrichtungen mehrere Stellplätze bedient, muss der Netzanschluss nicht erweitert werden, selbst wenn nochmals weitere Module angeschlossen werden.

Es ist hierbei möglich, dass die Vorrichtung bzw. das System stand-alone mit einem vorinstallierten Ladealgorithmus betrieben wird oder über eine Datenschnittstelle, insbesondere die OCPP Schnittstelle, Steuerungsdaten von alternativen Services von anderen Anbietern, wie z.B. einem Abrechnungsservice, verwendet werden. Dadurch kann es dem Betreiber und/oder Inhaber der Vorrichtung freigestellt werden, ob das System bzw. die Vorrichtung bzw. das Hauptmodul einen Internetzugang oder ähnliches (z.B. Telefonverbindung) verwenden soll oder nicht.

Bevorzugt weist jedes Modul (Hauptmodul und Anschlusseinrichtung/en) ein Mittel zum Ausführen bzw. Betreiben des Algorithmus (Ladealgorithmus) auf, wobei der Algorithmus bevorzugt auf jedem Modul vorinstalliert ist. Bevorzugt tauschen alle miteinander verbundene Module Betriebs- und/oder Steuerparameter untereinander aus, wodurch bevorzugt alle Modular die Parameter bevorzugt aller anderen Module kennt. Dies ist vorteilhaft, da dadurch jedes Modul z.B. selbstständig berechnen kann, ob es zum jeweiligen Zeitpunkt den Ladevorgang freigeben darf oder nicht.

Zur Sicherheit gibt es neben dem Algorithmus eine Hardware Redundanz: Neben dem Algorithmus stellt auch unsere Hardware zu jeder Zeit sicher, dass zu jeder Zeit nur ein Modul aktiv ist und nur exakt ein Auto geladen werden kann.

Die Kommunikation mit externen Systemen, z.B. über das OCPP-Protokoll, wird besonders bevorzugt nur vom Hauptmodul betrieben. Damit trotzdem jeder Ladepunkt überwacht werden kann und z.B. Authentifizierung funktioniert, stellt sich das System nach außen wie X Ladepunkte da. (X = Anzahl Ladepunkte = Hauptmodul + Anzahl an Anschlusseinrichtungen).

Alternativ kann anstelle des Vorhandenseins eines Hauptmoduls die Ladestation eine Strombereitstellungseinrichtung aufweisen.

Die Erfindung bezieht sich auf ein Vorrichtung 1 zum Aufladen von Batterien von Elektrofahrzeugen 2. Die Vorrichtung weist dabei auf: Eine Ladeeinrichtung 4 zum zeitversetzten Aufladen einer Vielzahl zeitgleich an der Vorrichtung 1 angeschlossener Elektrofahrzeuge 2, wobei die Ladeeinrichtung 4 eine Ladestation 6 zum Bereitstellen eines Ladestroms aufweist und wobei die Ladeeinrichtung 4 eine Strombereitstellungseinrichtung 8 aufweist, und wobei mehrere Anschlusseinrichtungen 10, 11 zum Anschließen der Vielzahl an Elektrofahrzeugen 2 vorgesehen sind, mehrere Anschlusseinrichtungen 10, 11 vorgesehen sind, wobei die Anschlusseinrichtungen 10, 11 in einer Reihenschaltung angeordnet sind, wobei die Anschlusseinrichtung 10 eine erste Input-/Outputeinheit 12 und eine damit über eine Schaltungsanordnung 14 verbundene zweite Input-/Outputeinheit 16 aufweist, wobei die zweite Input-/Outputeinheit 16 mindestens zwei Anschlussstecker 18 zum Anschließen von jeweils einem Elektrofahrzeug 2 und/oder einer weiteren Anschlusseinrichtung 11 aufweist, wobei jeder Anschlussstecker 18 zum Erzeugen einer Datenverbindung und/oder Stromverbindung zwischen dem daran angeschlossenen Elektrofahrzeug 2 und der Strombereitstellungseinrichtung 8 dient, wobei die Strombereitstellungseinrichtung 8 Bestandteil eines mit der Ladestadion 6 und mindestens einer Anschlusseinrichtung 10 koppelbaren Hauptmoduls 22 ist, wobei die Schaltungsanordnung 14 elektrisch betreibbare Schalter 20, insbesondere Schütze, zum mechanischen Erzeugen der Stromverbindung aufweist, wobei eine Betätigung eines Schalters 20 von der Strombereitstellungseinrichtung 8 bewirkbar ist, wobei das Hauptmodul und die Anschlusseinrichtung über ein Verbindungskabel miteinander verbunden sind, wobei das Verbindungskabel mindestens zwei Stränge bevorzugt mindestens oder genau drei Stränge aufweist, wobei in einem ersten Stang Adern verlaufen und in einem zweiten Strang ebenfalls Adern verlaufen, wobei der erste Strang den Ladestrom überträgt und wobei der zweite Strang zur Kommunikation dient und eine Versorgungsleitung einer Hardware Redundancy aufweist, wobei die Strombereitstellungseinrichtung 8 bewirkt, dass die Ladestation 6 den Ladestrom bevorzugt dauerhaft an die Anschlusseinrichtung 10 bereitstellt, und in Abhängigkeit von mindestens einem vordefinierten Steuerungsparameter den Ladestrom durch eine Ansteuerung der Schaltungsanordnung 14 genau einem Anschlussstecker 18 zuführt, wobei alle anderen Schalter in den anderen Anschlusseinrichtungen auf inaktiv geschaltet werden, wodurch stets nur ein Elektrofahrzeug geladen wird.

Erfindungsgemäß weist die Hardware Redundancy zumindest eine Versorgungsleitung 65 bestehend aus mindestens 2 und bevorzugt mindestens oder genau 3 Adern, die analog zur Stromleitung des Ladestroms von dem Hauptmodul (22) über/zu alle Anschlusseinrichtungen (10, 11, 110) im Verbindungskabel (34, 36) verläuft, jeweils einem Transistor (43, 63) im Hauptmodul und in jeder der Anschlusseinrichtunglen und eine Logikschaltung im Hauptmodul und in jeder Anschlusseinrichtung auf. Der ist dabei bevorzugt Schalter durch die Logikschaltung schaltbar. Die Logikschaltung schaltet den Schalter dabei bevorzugt nur, wenn ein definierter Logikwert vorliegt. Hierbei bewirkt eine Logikschaltung bevorzugt nur oder genau die Schaltung eines Schalters, wobei somit jedem Schalter mindestens oder genau eine Logikschaltung zugeordnet ist.

Ferner bezieht sich die vorliegende Erfindung ebenfalls auf ein Verfahren zum zeitversetzten Aufladen einer Vielzahl zeitgleich über mindestens eine Anschlusseinrichtung 10 an einer Vorrichtung gemäß Anspruch 1, angeschlossenen Elektrofahrzeuge (2). Die Ladeeinrichtung 4 weist dabei eine Ladestation (6) zum Bereitstellen eines Ladestroms auf und die Ladeeinrichtung 4 weist eine Strombereitstellungseinrichtung 8 auf. Die Anschlusseinrichtung 10 weist eine erste Input-/Outputeinheit 12 und eine damit über eine Schaltungsanordnung 14 verbundene zweite Input-/Outputeinheit 16 auf, wobei die zweite Input-/Outputeinheit 16 mindestens zwei Anschlussstecker 18 zum Anschließen von jeweils einem Elektrofahrzeug 2 und/oder einer weiteren Anschlusseinrichtung 11 aufweist. Jeder Anschlussstecker 18 dient hierbei zum Erzeugen einer Datenverbindung und/oder Stromverbindung zwischen dem daran angeschlossenen Elektrofahrzeug 2 und der Strombereitstellungseinrichtung 8, wobei die Strombereitstellungseinrichtung 8 Bestandteil eines mit der Ladestadion 6 und mindestens einer Anschlusseinrichtung 10 koppelbaren Hauptmoduls 22 ist, wobei das Hauptmodul und die Anschlusseinrichtung über ein Verbindungskabel miteinander verbunden sind, wobei das Verbindungskabel mindestens zwei Stränge, insbesondere mindestens oder genau drei Stränge, aufweist, wobei in einem ersten Stang Adern verlaufen und in einem zweiten Strang ebenfalls Adern verlaufen, wobei der erste Strang den Ladestrom überträgt und wobei der zweite Strang zur Kommunikation dient und eine Versorgungsleitung einer Hardware Redundancy aufweist. Das Verfahren weist ferner die Schritte auf: Bereitstellen eines Ladestroms durch die Ladestation 6, wobei die Strombereitstellungseinrichtung 8 bewirkt, dass die Ladestation 6 den Ladestrom bevorzugt dauerhaft an die Anschlusseinrichtung 10 bereitstellt, und Zuführen des Ladestroms an genau einen Anschlussstecker 18 in Abhängigkeit von mindestens einem vordefinierten Steuerungsparameter.

| | | | |
|---|---|---|---|
| **Bezugszeichenliste** | | 11 | weitere Anschlusseinrichtung |
| 1 | Vorrichtung | 12 | erste Input-/Outputeinheit |
| 2 | Elektrofahrzeuge, insbesondere Elektroautos | 14 | Schaltungsanordnung |
| | | 16 | zweite Input-/Outputeinheit |
| 4 | Ladeeinrichtung | 16a | Input-/Output zu weiterer Anschlusseinrichtung |
| 6 | Ladestation | | |
| 10 | Anschlusseinrichtung | 16b | Input-/Output zu Elektrofahrzeug |

| | | | |
|---|---|---|---|
| 17 | Ladestationsstecker | 46 | Stromzähler |
| 18 | Anschlussstecker | 47 | Spannungsquelle |
| 20 | Schalter | 48 | Datenaustauscheinrichtung (WiFi / 3G / 4G / 5G / Bluetooth / ZigBee) |
| 22 | Hauptmodul | | |
| 23 | Hauptmodulkopplungsstelle | 50 | Anzeigeeinrichtung |
| 24 | Ladestationkopplungsstelle | 52 | Identifikationseinrichtung / RFID-Einrichtung (insbesondere Kartenleser) |
| 25 | erste Hauptmoduladern | | |
| 26 | Anschlusseinrichtungskopplungsst elle | 60 | Slave Charge Controller der Anschlusseinrichtung |
| 27 | Elektrofahrzeugkopplungsstelle | 61 | Relais der Anschlusseinrichtung |
| 29 | zweite Hauptmoduladern | 62 | Anzeigeeinrichtung der Anschlusseinrichtung |
| 32 | Verbindungskabel zum Verbinden der Ladestation mit dem Hauptmodul | | |
| | | 63 | Transistor der Anschlusseinrichtung |
| 34 | Verbindungskabel zum Verbinden des Hauptmoduls mit der Anschlusseinrichtung | 64 | Identifikationseinrichtung / RFIDEinrichtung (insbesondere Kartenleser) der Anschlusseinrichtung |
| 36 | Verbindungskabel zum Verbinden zweier Anschlusseinrichtungen | | |
| | | 65 | Begrenzte Strom- und Spannungsversorgung |
| 38 | Gehäuse des Hauptmoduls | | |
| 39 | Gehäuse der Anschlusseinrichtung | 66 | Weiterführung zum Anschluss weiterer Anschlusseinrichtungen |
| 40 | Slave Charge Controller des Hauptmoduls | 70 | RFID-Identifikation |
| 41 | Relais des Hauptmoduls | 72 | Laden in Abhängigkeit von mindestens einem Prioritätskriterium |
| 42 | Master Charge Controller | | |
| 43 | Transistor des Hauptmoduls | 74 | Laden nach alternativer Reihenfolge |
| 44 | Netzteil (z.B. 12V 5A) / Stromversorgung zum Betrieb des Hauptmoduls | | |
| | | 76 | stechende Abschlussbedingung |
| | | 80 | Bestimmung der Ladeabfolge über Zeit- und/oder Energiekriterium |
| 45 | Detektionsverbindung | | |

| | | |
|---|---|---|
| 82 | Zusatzkriterium, wenn "80" zu keinem eindeutigen Ergebnis führt | (z.B. geringste Zeit und/oder Datum wird bevorzugt) |

## Patentansprüche

1. Vorrichtung (1) zum Aufladen von Batterien von Elektrofahrzeugen (2),
mindestens umfassend
eine Ladeeinrichtung (4) zum zeitversetzten Aufladen einer Vielzahl zeitgleich an der Vorrichtung (1) angeschlossener Elektrofahrzeuge (2),
wobei die Ladeeinrichtung (4) eine Ladestation (6) zum Bereitstellen eines Ladestroms aufweist und
wobei die Ladeeinrichtung (4) eine Strombereitstellungseinrichtung (8) aufweist,
und
wobei mehrere Anschlusseinrichtungen (10, 11) zum Anschließen der Vielzahl an Elektrofahrzeugen (2) vorgesehen sind,
wobei die Anschlusseinrichtungen (10, 11) in einer Reihenschaltung angeordnet sind,
wobei jede Anschlusseinrichtung (10) eine erste Input-/Outputeinheit (12) und eine damit über eine Schaltungsanordnung (14) verbundene zweite Input-/Outputeinheit (16) aufweist, wobei die zweite Input-/Outputeinheit (16) mindestens zwei Anschlussstecker (18) zum Anschließen von jeweils einem Elektrofahrzeug (2) und/oder einer weiteren Anschlusseinrichtung (11) aufweist,
wobei jeder Anschlussstecker (18) zum Erzeugen einer Datenverbindung und/oder Stromverbindung zwischen dem daran angeschlossenen Elektrofahrzeug (2) und der Strombereitstellungseinrichtung (8) dient,
wobei die Strombereitstellungseinrichtung (8) Bestandteil eines mit der Ladestation (6) und
mindestens einer Anschlusseinrichtung (10) koppelbaren Hauptmoduls (22) ist,
wobei die Schaltungsanordnung (14) elektrisch betreibbare Schalter (20), insbesondere Schütze, zum mechanischen Erzeugen der Stromverbindung aufweist, wobei eine Betätigung eines Schalters (20) von der Strombereitstellungseinrichtung (8) bewirkbar ist,
wobei das Hauptmodul (22) und die mindestens eine Anschlusseinrichtung (10) über ein Verbindungskabel miteinander verbunden sind,
wobei das Verbindungskabel mindestens zwei Stränge bevorzugt mindestens oder genau drei Stränge aufweist, wobei in einem ersten Strang Adern verlaufen und in einem zweiten Strang ebenfalls Adern verlaufen, wobei der erste Strang den Ladestrom überträgt und wobei der zweite Strang zur Kommunikation dient und eine Versorgungsleitung einer Hardware Redundancy aufweist,
wobei die Strombereitstellungseinrichtung (8) bewirkt, dass die Ladestation (6) den Ladestrom bevorzugt dauerhaft an die Anschlusseinrichtungen (10) bereitstellt, und in Abhängigkeit von mindestens einem vordefinierten Steuerungsparameter den Ladestrom durch eine Ansteuerung der Schaltungsanordnung (14) genau einem Anschlussstecker (18) zuführt, wobei alle anderen Schalter in den anderen Anschlusseinrichtungen auf inaktiv geschaltet werden, wodurch stets nur ein Elektrofahrzeug geladen wird wobei die Hardware Redundancy zumindest aus der Versorgungsleitung (65) bestehend aus mindestens 2 und bevorzugt mindestens oder genau 3 Adern, die analog zur Stromleitung des Ladestroms von dem Hauptmodul (22) über/zu alle Anschlusseinrichtungen (10, 11, 110) im Verbindungskabel (34, 36) verläuft, einem Relais (41, 61) im Hauptmodul und in jeder Anschlusseinrichtung, einem Transistor (43, 63) im Hauptmodul und in den Anschlusseinrichtungen, einer Spannungsquelle (47) mit bestimmtem Strom und bestimmter Spannung im Hauptmodul (22) besteht.

2. Vorrichtung nach Anspruch 1,
**dadurch gekennzeichnet, dass**
die Datenverbindung zwischen dem jeweiligen Anschlussstecker (18) und der Strombereitstellungseinrichtung (8) dauerhaft besteht und die Stromverbindung mechanisch in Abhängigkeit des mindestens einen Steuerungsparameters erzeugt wird.

3. Vorrichtung (1) zum Aufladen von Batterien von Elektrofahrzeugen (2),mindestens umfassend eine Ladeeinrichtung (4) zum zeitversetzten Aufladen einer Vielzahl zeitgleich an der Vorrichtung (1) angeschlossener Elektrofahrzeuge (2),wobei die Ladeeinrichtung (4) eine Ladestation (6) zum Bereitstellen eines Ladestroms aufweist und wobei die Ladeeinrichtung (4) eine Strombereitstellungseinrichtung (8) aufweist, und wobei mehrere Anschlusseinrichtungen (10, 11) zum Anschließen der Vielzahl an Elektrofahrzeugen (2) vorgesehen sind, wobei die Anschlusseinrichtungen (10, 11) in einer Reihenschaltung angeordnet sind,wobei jede Anschlusseinrichtung (10) eine erste Input-/Outputeinheit (12) und eine damit über eine Schaltungsanordnung (14) verbundene zweite Input-/Outputeinheit (16) aufweist, wobei die zweite Input-/Outputeinheit (16) mindestens zwei Anschlussstecker (18) zum Anschließen von jeweils einem Elektrofahrzeug (2) und/oder einer weiteren Anschlusseinrichtung (11) aufweist, wobei jeder Anschlussstecker (18) zum Erzeugen einer Datenverbindung und/oder Stromverbindung zwischen dem daran angeschlossenen Elektrofahrzeug (2) und der Strombereitstellungseinrichtung (8) dient, wobei die Strombereitstellungseinrichtung (8) Bestandteil eines mit der Ladestation (6) und mindestens einer Anschlusseinrichtung (10) koppelbaren Hauptmoduls (22) ist, wobei die Schaltungsanordnung (14) elektrisch betreibbare Schalter (20), insbesondere Schütze, zum mechanischen Erzeugen der Stromverbindung aufweist, wobei eine Betätigung eines Schalters (20) von der Strombereitstellungseinrichtung (8) bewirkbar ist, wobei das Hauptmodul (22) und die mindestens eine Anschlusseinrichtung (10) über ein Verbindungskabel miteinander verbunden sind, wobei das Verbindungskabel mindestens zwei Stränge bevorzugt mindestens oder genau drei Stränge aufweist, wobei in einem ersten Strang Adern verlaufen und in einem zweiten Strang ebenfalls Adern verlaufen, wobei der erste Strang den Ladestrom überträgt und wobei der zweite Strang zur Kommunikation dient und eine Versorgungsleitung einer Hardware Redundancy aufweist, wobei die Strombereitstellungseinrichtung (8) bewirkt, dass die Ladestation (6) den Ladestrom bevorzugt dauerhaft an die Anschlusseinrichtungen (10) bereitstellt, und in Abhängigkeit von mindestens einem vordefinierten Steuerungsparameter den Ladestrom durch eine Ansteuerung der Schaltungsanordnung (14) genau einem Anschlussstecker (18) zuführt, wobei alle anderen Schalter in den anderen Anschlusseinrichtungen auf inaktiv geschaltet werden, wodurch stets nur ein Elektrofahrzeug geladen wird; wobei die Hardware Redundancy zumindest aus der Versorgungsleitung (65) bestehend aus mindestens 2 und bevorzugt mindestens oder genau 3 Adern, die analog zur Stromleitung des Ladestroms von dem Hauptmodul (22) über/zu alle Anschlusseinrichtungen (10, 11, 110) im Verbindungskabel (34, 36) verläuft, jeweils einem Transistor (43, 63) im Hauptmodul und in jeder der Anschlusseinrichtungen und einer Logikschaltung im Hauptmodul und in jeder Anschlusseinrichtung besteht, wobei der Schalter durch die Logikschaltung schaltbar ist, wobei die Logikschaltung den Schalter nur schaltet, wenn ein definierter Logikwert vorliegt.

4. Vorrichtung nach einem der vorangegangenen Ansprüche,
**dadurch gekennzeichnet, dass**
der vordefinierte Steuerungsparameter zumindest durch die Ladekapazität, den Ladegrad, den Ladestrom, den Anschlusszeitpunkt an den Anschlussstecker (18), eine Fahrzeugidentifikation, eine Fahreridentifikation, eine Besitzeridentifikation und/oder ein Priorisierungskriterium definiert wird.

5. Vorrichtung nach einem der vorangegangenen Ansprüche,
**dadurch gekennzeichnet, dass**
an jede Anschlusseinrichtung (10) mindestens eine weitere Anschlusseinrichtung (11) angeschlossen ist, wobei jede der Anschlusseinrichtungen (10, 11) Steuerungsparameterdaten zu dem mindestens einen Steuerungsparameter und Hauptparameterdaten erzeugen und zumindest an die Strombereitstellungseinrichtung (8) und bevorzugt ebenfalls an die mindestens eine andere Anschlusseinrichtung (10, 11) übermittelt.

6. Vorrichtung nach Anspruch 5,
**dadurch gekennzeichnet, dass**
die Hauptparameterdaten mindestens einen Hauptparameter und bevorzugt mehrere Hauptparameter repräsentieren, wobei die Hauptparameter zumindest eine individuelle Identifikationsnummer der Anschlusseinrichtung (10, 11) und/oder den Status der Anschlusseinrichtung (10, 11) und/oder die physische Position in einer Hauptschaltungsanordnung umfasst, wobei sich die Hauptschaltungsanordnung aus der Gesamtheit der mehreren Schaltungsanordnungen (14) der einzelnen Anschlusseinrichtungen (10, 11) ergibt.

7. Vorrichtung nach einem der vorangegangenen Ansprüche,
**dadurch gekennzeichnet, dass**
die Strombereitstellungseinrichtung (8) Bestandteil der Ladestation (6) ist.

8. Verfahren zum zeitversetzten Aufladen einer Vielzahl zeitgleich über mindestens eine Anschlusseinrichtung (10) an einer Vorrichtung gemäß Anspruch 1 angeschlossenen Elektrofahrzeuge (2),
wobei die Ladeeinrichtung (4) eine Ladestation (6) zum Bereitstellen eines Ladestroms aufweist und
wobei die Ladeeinrichtung (4) eine Strombereitstellungseinrichtung (8) aufweist, und wobei mehrere Anschlusseinrichtungen zum Anschließen der Vielzahl an Elektrofahrzeugen vorgesehen sind, wobei die Anschlusseinrichtungen in einer Reihenschaltung angeordnet sind, wobei jede Anschlusseinrichtung (10) eine erste Input-/Outputeinheit (12) und eine damit über eine Schaltungsanordnung (14) verbundene zweite Input-/Outputeinheit (16) aufweist, wobei die zweite Input-/Outputeinheit (16) mindestens zwei Anschlussstecker (18) zum Anschließen von jeweils einem Elektrofahrzeug (2) und/oder einer weiteren Anschlusseinrichtung (11) aufweist,
wobei jeder Anschlussstecker (18) zum Erzeugen einer Datenverbindung und/oder Stromverbindung zwischen dem daran angeschlossenen Elektrofahrzeug (2) und der Strombereitstellungseinrichtung (8) dient,
wobei die Strombereitstellungseinrichtung (8) Bestandteil eines mit der Ladestation (6) und
mindestens einer Anschlusseinrichtung (10) koppelbaren Hauptmoduls (22) ist,
wobei das Hauptmodul und die mindestens eine Anschlusseinrichtung über ein Verbindungskabel miteinander verbunden sind,
wobei das Verbindungskabel mindestens zwei Stränge aufweist, wobei in einem ersten Stang Adern verlaufen und in einem zweiten Strang ebenfalls Adern verlaufen, wobei der erste Strang den Ladestrom überträgt und wobei der zweite Strang zur Kommunikation dient und eine Versorgungsleitung einer Hardware Redundancy aufweist, wobei die Hardware Redundancy zumindest aus der Versorgungsleitung (65) bestehend aus mindestens 2 und bevorzugt mindestens oder genau 3 Adern, die analog zur Stromleitung des Ladestroms von dem Hauptmodul (22) über/zu alle Anschlusseinrichtungen (10, 11, 110) im Verbindungskabel (34, 36) verläuft, einem Relais (41, 61) im Hauptmodul und in jeder Anschlusseinrichtung, einem Transistor (43, 63) im Hauptmodul und in den Anschlusseinrichtungen, einer Spannungsquelle (47) mit bestimmtem Strom und bestimmter Spannung im Hauptmodul (22) besteht,
mindestens umfassend die Schritte:
Bereitstellen eines Ladestroms durch die Ladestation (6),
wobei die Strombereitstellungseinrichtung (8) bewirkt, dass die Ladestation (6) den Ladestrom bevorzugt dauerhaft an die Anschlusseinrichtungen (10) bereitstellt,
und
Zuführen des Ladestroms an genau einen Anschlussstecker (18) in Abhängigkeit von mindestens einem vordefinierten Steuerungsparameter.

9. Verfahren nach Anspruch 8,
**dadurch gekennzeichnet, dass**
die Strombereitstellungseinrichtung (8) die vordefinierten Steuerungsparameter auswertet und daraus eine Ladestrombeaufschlagungsreihenfolge der einzelnen Anschlussstecker (18) bestimmt,
wobei die Ladestrombeaufschlagungsreihenfolge in Abhängigkeit von mindestens einem Priorisierungskriterium bestimmt wird,
wobei den Elektrofahrzeugen (2) Priorisierungswerte des Priorisierungskriteriums zuweisbar sind, wobei die Strombereitstellungseinrichtung (8) die Priorisierungswerte der einzelnen Elektrofahrzeuge (2) nach vorbestimmten Regeln abgleicht und daraus die Ladestrombeaufschlagungsreihenfolge bestimmt,
wobei das Prioritätskriterium die Nutzungshäufigkeit des Elektrofahrzeugs (2) und/oder der Batterieladegrad und/oder der Zeitpunkt der nächsten Verwendung des Elektrofahrzeugs (2) und/oder ein für eine nächste Verwendung des Elektrofahrzeugs (2) vorbestimmter Strombedarf und/oder die physikalische Position des jeweiligen Anschlusssteckers des Elektrofahrzeugs ist
oder
wobei das Prioritätskriterium der jeweilige Anschlusszeitpunkt eines Elektrofahrzeugs (2) an einen Anschlussstecker (18) ist, wobei die Ladestrombeaufschlagungsreihenfolge in Abhängigkeit des Anschlusszeitpunkts bestimmt wird (first in first out Prinzip).

10. Computerprogrammprodukt umfassend Befehle, die bewirken, dass die Vorrichtung des Anspruchs 1 die Verfahrensschritte eines Verfahrens nach Ansprüchen 8 oder 9 ausführt.

## Claims

1. A device (1) for charging batteries of electric vehicles (2), comprising at least
a charging device (4) for time-offset charging of a plurality of electric vehicles (2) simultaneously connected to the device (1),
the charging device (4) comprising a charging station (6) for providing a charging current, and
the charging device (4) comprising an electrical power supply device (8),
and
wherein a plurality of connecting devices (10, 11) being provided for connecting the plurality of electric vehicles (2), wherein the connecting devices (10, 11) being disposed in a series circuit,
wherein each connecting device (10) comprising a first input/output unit (12) and a second input/output unit (16) connected thereto by means of a circuit configuration (14), the second input/output unit (16) comprising at least two connecting plugs (18) each for connecting one electric vehicle (2) and/or an additional connecting device (11),
wherein each connecting plug (18) serving for producing a data connection and/or power connection between the electric vehicle (2) connected thereto and the electrical power supply device (8),
wherein the electrical power supply device (8) being part of a main module (22) for coupling to the charging station (6) and at least one connecting device (10),
wherein the circuit configuration (14) comprising electrically operable switches (20), particularly contactors, for mechanically establishing the electrical connection, wherein the electrical power supply device (8) being able to bring about actuation of a switch (20),
wherein the main module (22) and at least one connecting device being connected to each other by means of a connecting cable,
wherein the connecting cable comprising at least two strands, preferably at least or exactly three strands, wherein conductors running in a first strand and conductors also running in a second strand, the first strand transmitting the charging current, and the second strand serving for communicating and comprising a supply line of a hardware redundancy,
wherein the electrical power supply device (8) causing the charging station (6) to preferably continuously provide the charging current to the connecting devices (10) and to deliver the charging current to exactly one connecting plug (18) by actuating the circuit configuration (14) as a function of at least one predefined control parameter, wherein all other switches in the other connecting devices being switched to inactive, whereby only one electric vehicle is charged at a time, wherein
the hardware redundancy is made of at least the supply line (65) made of at least two and preferably at least or exactly three conductors running from the main module (22) via/to all connecting devices (10, 11, 110) analogously to the power line of the charging current in the connecting cable (34, 36), a relay (41, 61) in the main module and in each connecting device, a transistor (43, 63) in the main module and in the connecting devices, and a voltage source (47) having a particular current and particular voltage in the main module (22).

2. The device according to claim 1,
**characterized in that**
the data connection between each connecting plug (18) and the electrical power supply device (8) is continuously present and the power connection is established mechanically as a function of the at least one control parameter.

3. A device (1) for charging batteries of electric vehicles (2), comprising at least
a charging device (4) for time-offset charging of a plurality of electric vehicles (2) simultaneously connected to the device (1),
the charging device (4) comprising a charging station (6) for providing a charging current, and
the charging device (4) comprising an electrical power supply device (8),
and
wherein a plurality of connecting devices (10, 11) being provided for connecting the plurality of electric vehicles (2), wherein the connecting devices (10, 11) being disposed in a series circuit,
wherein each connecting device (10) comprising a first input/output unit (12) and a second input/output unit (16) connected thereto by means of a circuit configuration (14), the second input/output unit (16) comprising at least two connecting plugs (18) each for connecting one electric vehicle (2) and/or an additional connecting device (11),
wherein each connecting plug (18) serving for producing a data connection and/or power connection between the electric vehicle (2) connected thereto and the electrical power supply device (8),
wherein the electrical power supply device (8) being part of a main module (22) for coupling to the charging station (6) and at least one connecting device (10),
wherein the circuit configuration (14) comprising electrically operable switches (20), particularly contactors, for mechanically establishing the electrical connection, wherein the electrical power supply device (8) being able to bring about actuation of a switch (20),
wherein the main module (22) and at least one connecting device being connected to each other by means of a connecting cable,
wherein the connecting cable comprising at least two strands, preferably at least or exactly three strands, wherein conductors running in a first strand and conductors also running in a second strand, the first strand transmitting the charging current, and the second strand serving for communicating and comprising a supply line of a hardware redundancy,
wherein the electrical power supply device (8) causing the charging station (6) to preferably continuously provide the charging current to the connecting devices (10) and to deliver the charging current to exactly one connecting plug (18) by actuating the circuit configuration (14) as a function of at least one predefined control parameter, wherein all other switches in the other connecting devices being switched to inactive, whereby only one electric vehicle is charged at a time,
wherein the hardware redundancy is made of at least the supply line (65) made of at least two and preferably at least or exactly three conductors running from the main module (22) via/to all connecting devices (10, 11, 110) analogously to the power line of the charging current in the connecting cable (34, 36), a transistor (43, 63) in the main module and in each of the connecting devices, and a logic circuit in the main module and in each connecting device,
wherein the switch can be switched by the logic circuit, wherein the logic circuit switches the switch only if a defined logic value is present.

4. The device according to any one of the preceding claims,
**characterized in that**
the predefined control parameter is defined at least by the charging capacity, the charge level, the charging current, the time of connecting to the connecting plug (18), a vehicle identification, a driver identification, an owner identification, and/or a prioritization criterion.

5. The device according to any one of the preceding claims,
**characterized in that**
at least one additional connecting device (11) is connected to each connecting device (10), wherein each of the connecting devices (10, 11) produces control parameter data for the at least one control parameter and main parameter data, and transmits the same at least to the electrical power supply device (8) and preferably also to the at least one other connecting device (10, 11).

6. The device according to claim 5,
**characterized in that**
the main parameter data represent at least one main parameter and preferably a plurality of main parameters, wherein the main parameter comprises at least one individual identification number of the connecting device (10, 11) and/or the status of the connecting device (10, 11) and/or the physical position in a main circuit configuration, wherein the main circuit configuration results from the aggregate of the plurality of circuit configurations (14) of the individual connecting devices (10, 11).

7. The device according to any one of the preceding claims,
**characterized in that**
the electrical power supply device (8) is part of the charging station (6).

8. A method for time-offset charging of a plurality of electric vehicles (2) simultaneously connected to a device according to claim 1 by means of at least one connecting device (10),
wherein the charging device (4) comprising a charging station (6) for providing a charging current, and
wherein the charging device (4) comprising an electrical power supply device (8),
and wherein multiple connecting devices for connecting a plurality of electric vehicles is provided, wherein the connecting devices being disposed in a series circuit, wherein each
connecting device (10) comprising a first input/output unit (12) and a second input/output unit (16) connected thereto by means of a circuit configuration (14), the second input/output unit (16) comprising at least two connecting plugs (18) each for connecting one electric vehicle (2) and/or an additional connecting device (11), wherein each connecting plug (18) serving for producing a data connection and/or power connection between the electric vehicle (2) connected thereto and the electrical power supply device (8),
wherein the electrical power supply device (8) being part of a main module (22) for coupling to the charging station (6) and at least one connecting device (10),
the main module and the at least one connecting device being connected to each other by means of a connecting cable,
the connecting cable comprising at least two strands, wherein conductors running in a first strand and conductors also running in a second strand, wherein the first strand transmitting the charging current, and the second strand serving for communicating and comprising a supply line of a hardware redundancy,
wherein the hardware redundancy is made of at least the supply line (65) made of at least two and preferably at least or exactly three conductors running from the main module (22) via/to all connecting devices (10, 11, 110) analogously to the power line of the charging current in the connecting cable (34, 36), a relay (41, 61) in the main module and in each connecting device, a transistor (43, 63) in the main module and in the connecting devices, and a voltage source (47) having a particular current and particular voltage in the main module (22),
comprising at least the steps:
providing a charging current by the charging station (6),
the electrical power supply device (8) causing the charging station (6) to provide the charging current preferably continuously to the connecting devices (10), and
delivering the charging current to exactly one connecting plug (18) as a function of at least one predefined control parameter.

9. The method according to claim 8,
**characterized in that**
the electrical power supply device (8) evaluates the predefined control parameters and determines therefrom a charging current application sequence of the individual connecting plugs (18),
wherein the charging current application sequence is determined as a function of at least one prioritizing criterion,
wherein prioritizing values of the prioritizing criterion can be assigned to the electric vehicles (2), wherein the electrical power supply device (8) compares the prioritization values of the individual electric vehicles (2) according to predetermined rules and determines therefrom the charging current application sequence,
wherein the priority criterion is the frequency of use of the electric vehicle (2) and/or the battery charge level and/or the time of the next use of the electric vehicle (2) and/or a predetermined power requirement for a next use of the electric vehicle (2) and/or the physical position of the corresponding connecting plug of the electric vehicle,
or
wherein the priority criterion is the corresponding time of connecting an electric vehicle (2) to a connecting plug (18), wherein the charging current application sequence is determined as a function of the time of connecting (first-in-first-out principle).

10. A computer program product comprising commands causing the device of claim 1 to execute the method steps of a method according to claim 8 or 9.

## Revendications

1. Dispositif (1) de charge de batteries de véhicules électriques (2), comprenant au moins un dispositif de charge (4) pour la charge décalée dans le temps d'une pluralité de véhicules électriques (2) raccordés simultanément au dispositif (1),
dans lequel le dispositif de charge (4) comprend une station de charge (6) pour la fourniture d'un courant de charge et
dans lequel le dispositif de charge (4) comprend un dispositif d'alimentation électrique (8) et
dans lequel plusieurs dispositifs de raccordement (10, 11) sont prévus pour le raccordement de la pluralité de véhicules électriques (2),
dans lequel les dispositifs de raccordement (10, 11) sont branchés en série,
dans lequel chaque dispositif de raccordement (10) comprend une première unité d'entrée/sortie (12) et une deuxième unité d'entrée/sortie (16) raccordée avec celle-ci par l'intermédiaire d'un dispositif de branchement (14),
dans lequel la deuxième unité d'entrée/sortie (16) comprend au moins deux connecteurs de raccordement (18) pour le raccordement respectivement d'un véhicule électrique (2) et/ou d'un autre dispositif de raccordement (11),
dans lequel chaque connecteur (18) permet l'établissement d'une liaison de données et/ou d'une liaison de courant entre le véhicule électrique (2) qui y est raccordé et le dispositif d'alimentation électrique (8),
dans lequel le dispositif d'alimentation électrique (8) fait partie d'un module principal (22) pouvant être couplé avec la station de charge (6) et l'au moins un dispositif de raccordement (10),
dans lequel le dispositif de branchement (14) comprend des commutateurs électriques (20), plus particulièrement des contacteurs électriques, pour la production mécanique de la liaison électrique,
dans lequel un actionnement d'un commutateur (20) peut être effectué par le dispositif d'alimentation électrique (8),
dans lequel le module principal (22) et l'au moins un dispositif de raccordement (10) sont reliés entre eux par l'intermédiaire d'un câble de raccordement,
dans lequel le câble de raccordement comprend au moins deux brins, de préférence au moins ou exactement trois brins,
dans lequel, dans un premier brin, s'étendent des fils et, dans un deuxième brin, s'étendent également des fils,
dans lequel le premier brin transmet le courant de charge et
dans lequel le deuxième brin permet la communication et comprend une conduite d'alimentation d'une redondance matérielle,
dans lequel le dispositif d'alimentation électrique (8) fait en sorte que la station de charge (6) fournit le courant de charge de préférence durablement aux dispositifs de raccordement (10) et, en fonction d'au moins un paramètre de commande prédéfini, introduit le courant de charge, à l'aide d'un contrôle du dispositif de branchement (14), dans exactement un connecteur de raccordement (18),
dans lequel tous les autres commutateurs des autres dispositifs de raccordement sont inactivés, ce qui fait qu'un seul véhicule électrique est toujours chargé,
dans lequel la redondance matérielle est constituée au moins de la conduite d'alimentation (65) constituée d'au moins 2 et de préférable d'au moins ou exactement 3 fils, qui s'étend, de manière analogue à la conduite électrique du courant de charge, du module principal (22), par l'intermédiaire / vers tous les dispositifs de raccordement (10, 11, 110) dans le câble de raccordement (34, 36), d'un relais (41, 61) dans le module principal et, dans chaque dispositif de raccordement, d'un transistor (43, 63) dans le module principal et, dans les dispositifs de raccordement, d'une source de tension (47) avec un courant déterminé et une tension déterminée dans le module principal (22).

2. Dispositif selon la revendication 1,
**caractérisé en ce que**
la liaison de données entre le connecteur de raccordement (18) respectif et le dispositif d'alimentation électrique (8) existe durablement et la liaison de courant est générée mécaniquement en fonction de l'au moins un paramètre de commande.

3. Dispositif (1) pour la charge de batteries de véhicules électriques (2), comprenant au moins un dispositif de charge (4) pour la charge décalée dans le temps d'une pluralité de véhicules électriques (2) raccordés simultanément au dispositif (1), dans lequel le dispositif de charge (4) comprend une station de charge (6) pour la fourniture d'un courant de charge et dans lequel le dispositif de charge (4) comprend un dispositif d'alimentation électrique (8) et dans lequel plusieurs dispositifs de raccordement (10, 11) pour le raccordement de la pluralité de véhicules électriques (2) sont prévus, dans lequel les dispositifs de raccordement (10, 11) sont branchés en série, dans lequel chaque dispositif de raccordement (10) comprend une première unité d'entrée/sortie (12) et une deuxième unité d'entrée/sortie (16) reliée avec celle-ci par l'intermédiaire d'un dispositif de branchement (14), dans lequel la deuxième unité d'entrée/sortie (16) comprend au moins deux connecteurs de raccordement (18) pour le raccordement respectivement d'un véhicule électrique (2) et/ou d'au moins un autre dispositif de raccordement (11), dans lequel chaque connecteur de raccordement (18) permet l'établissement d'une liaison de données et/ou d'une liaison électrique entre le véhicule électrique (2) qui y est raccordé et le dispositif d'alimentation électrique (8), dans lequel le dispositif d'alimentation électrique (8) fait partie d'un module principal (22) pouvant être couplée avec la station de charge (6) et l'au moins un dispositif de raccordement (10), dans lequel le dispositif de branchement (14) comprend des commutateurs électriques (20), plus particulièrement des contacteurs électriques, pour l'établissement mécanique de la liaison électrique, dans lequel un actionnement d'un commutateur (20) peut être provoqué par le dispositif d'alimentation électrique (8), dans lequel le module principal (22) et l'au moins un dispositif de raccordement (10) sont reliés entre eux par l'intermédiaire d'un câble de raccordement, dans lequel le câble de raccordement comprend au moins deux brins, de préférence au moins ou exactement trois brins, dans lequel, dans un premier, brin, s'étendent des fils et, dans un deuxième brin, s'étendent également des fils, dans lequel le premier brin transmet le courant de charge et dans lequel le deuxième brin permet la communication et comprend une conduite d'alimentation d'une redondance matérielle, dans lequel le dispositif d'alimentation électrique (8) fait en sorte que la station de charge (6) fournit le courant de charge, de préférence durablement, aux dispositifs de raccordement (10) et introduit, en fonction d'au moins un paramètre de commande prédéfini, le courant de charge dans exactement un connecteur de raccordement (18) à l'aide d'une commande du dispositif de branchement (14), dans lequel tous les autres commutateurs dans les autres dispositifs de raccordement sont inactivés, ce qui permet de charger toujours un seul véhicule électrique ; dans lequel la redondance matérielle est constituée au moins de la conduite d'alimentation (65) constituée d'au moins 2 et de préférence d'au moins ou exactement 3 fils, qui s'étendant, de manière analogue à la conduite électrique du courant charge, du module principal (22) par l'intermédiaire / vers tous les dispositifs de raccordement (10, 11, 110) dans le câble de raccordement (34, 36), respectivement d'un transistor (43, 63) dans le module principal et dans chacun des dispositifs de raccordement et d'un circuit logique dans le module principal et dans chaque dispositif de raccordement, dans lequel le commutateur peut être branché à l'aide du circuit logique, dans lequel le circuit logique ne branche le commutateur que lorsqu'il existe une valeur logique définie.

4. Dispositif selon l'une des revendications précédentes, **caractérisé en ce que** le paramètre de commande prédéfini est défini au moins par la capacité de charge, le degré de charge, le courant de charge, le moment du raccordement au connecteur de raccordement (18), une identification du véhicule, une identification du conducteur, une identification du propriétaire et/ou un critère de priorisation.

5. Dispositif selon l'une des revendications précédentes, **caractérisé en ce que**, à chaque dispositif de raccordement (10) est raccordé au moins un autre dispositif de raccordement (11), dans lequel chacun des dispositifs de raccordement (10, 11) génèrent des données de paramètres de commande concernant l'au moins un paramètre de commande et des données de paramètres principaux et les transmet au moins au dispositif d'alimentation électrique (8) et, de préférence, également à l'au moins un autre dispositif de raccordement (10, 11).

6. Dispositif selon la revendication 5,
**caractérisé en ce que**
les données de paramètres principaux représentent au moins un paramètre principal et de préférence plusieurs paramètres principaux, dans lequel les paramètres principaux comprennent au moins un numéro d'identité individuel du dispositif de raccordement (10, 11) et/ou l'état du dispositif de raccordement (10, 11) et/ou la position physique dans un dispositif de branchement principal, dans lequel le dispositif de branchement principal résulte de l'ensemble des plusieurs dispositifs de branchement (14) des différents dispositifs de raccordement (10, 11).

7. Dispositif selon l'une des revendications précédentes,
**caractérisé en ce que**
le dispositif d'alimentation électrique (8) fait partie de la station de charge (6).

8. Procédé pour la charge décalée dans le temps d'une pluralité de véhicules électriques (2) raccordés simultanément par l'intermédiaire d'au moins un dispositif de raccordement (10) à un dispositif selon la revendication 1,
dans lequel le dispositif de charge (4) comprend une station de charge (6) pour la fourniture d'un courant de charge et
dans lequel le dispositif de charge (4) comprend un dispositif d'alimentation électrique (8),
et dans lequel plusieurs dispositifs de raccordement sont prévus pour le raccordement de la pluralité de véhicules électriques, dans lequel les dispositifs de raccordement sont branchés en série,
dans lequel chaque dispositif de raccordement (10) comprend une première unité d'entrée/sortie (12) et une deuxième unité d'entrée/sortie (16) reliée avec celle-ci par l'intermédiaire d'un dispositif de branchement (14),
dans lequel la deuxième unité d'entrée/sortie (16) comprend au moins deux connecteurs de raccordement (18) pour le raccordement respectivement d'un véhicule électrique (2) et/ou d'un autre dispositif de raccordement (11),
dans lequel chaque connecteur de raccordement (18) permet l'établissement d'une liaison de données et/ou d'une liaison électrique entre le véhicule électrique (2) qui y est raccordé et le dispositif d'alimentation électrique (8),
dans lequel le dispositif d'alimentation électrique (8) fait partie d'un module principal (22) pouvant être couplé avec la station de charge (6) et au moins un dispositif de raccordement (10),
dans lequel le module principal et l'au moins un dispositif de raccordement sont reliés entre eux par l'intermédiaire d'un câble de raccordement,
dans lequel le câble de raccordement comprend au moins deux brins,
dans lequel, dans un premier brin, s'étendent des fils et, dans un deuxième brin, s'étendent également des fils,
dans lequel le premier brin transmet le courant de charge et
dans lequel le deuxième brin permet la communication et comprend une conduite d'alimentation d'une redondance matérielle,
dans lequel la redondance matérielle est constituée au moins de la conduite d'alimentation (65) constituée d'au moins 2 et de préférence d'au moins ou exactement 3 fils, qui s'étendent, de manière analogue à la conduite électrique du courant de charge, du module principal (22) par l'intermédiaire / vers tous les dispositifs de raccordement (10, 11, 110) dans le câble de raccordement (34, 36), d'un relais (41, 61) dans le module principal et, dans chaque dispositif de raccordement, d'un transistor (43, 63) dans le module principal et dans les dispositifs de raccordement, d'une source de tension (47) avec un courant déterminé et une tension déterminée dans le module principal (22),
comprenant au moins les étapes suivantes :
fourniture d'un courant de charge par la station de charge (6),
dans lequel le dispositif d'alimentation électrique (8) fait en sorte que la station de charge (6) fournit le courant de charge, de préférence durablement, aux dispositifs de raccordement (10),
et
l'introduction du courant de charge dans exactement un connecteur de raccordement (18) en fonction d'au moins un paramètre de commande prédéfini.

9. Procédé selon la revendication 8,
**caractérisé en ce que**
le dispositif d'alimentation électrique (8) analyse les paramètres de commande prédéfinis et détermine à partir de ceux-ci une séquence d'alimentation en courant de charge des différents connecteurs de raccordement (18),
dans lequel la séquence d'alimentation en courant de charge est déterminée en fonction d'au moins un critère de priorisation,
dans lequel, aux véhicules électriques (2), peuvent être attribuées des valeurs de priorisation du critère de priorisation,
dans lequel le dispositif d'alimentation électrique (8) compare les valeurs de priorisation des différents véhicules électriques (2) selon des règles prédéterminées et en déduit la séquence d'alimentation en courant de charge,
dans lequel le critère de priorisation est la fréquence d'utilisation du véhicule électrique (2) et/ou le degré de charge et/ou le moment de l'utilisation suivante du véhicule électrique (2) et/ou un besoin en courant prédéterminé pour l'utilisation suivante du véhicule électrique (2) et/ou la position physique du connecteur de raccordement respectif du véhicule électrique
ou
dans lequel le critère de priorité est le moment de raccordement respectif d'un véhicule électrique (2) à un connecteur de raccordement (18),
dans lequel la séquence d'alimentation en courant de charge est déterminée en fonction du moment de raccordement (principe « first in forst out »).

10. Produit de programme informatique comprenant des instructions qui font en sorte que le dispositif selon la revendication 1 exécute les étapes d'un procédé selon les revendications 8 ou 9.
